# EUROPÄISCHE PATENTSCHRIFT

(11) **EP 1 511 952 B1**
(45) Veröffentlichungstag und Bekanntmachung des Hinweises auf die Patenterteilung: **19.12.2007**
(21) Anmeldenummer: 03724992.7
(22) Anmeldetag: 10.04.2003
(51) Int. Cl.: F16H 57/02

(54) **STANDARDANTRIEB, BAUREIHE MIT ZWISCHENFLANSCH**
STANDARD DRIVE, SERIES WITH AN INTERMEDIATE FLANGE
ENTRAINEMENT STANDARD, GAMME DE FABRICATION A FLASQUE INTERMEDIAIRE

(30) Priorität: 29.05.2002 DE 10224358; 05.12.2002 DE 10256752
(43) Veröffentlichungstag der Anmeldung: 09.03.2005
(73) Patentinhaber: SEW-EURODRIVE GMBH & CO., D-76646 Bruchsal (DE)
(72) Erfinder: TÜNGLER, Eberhard, 76646 Bruchsal (DE); RICHERT, René, F-67160 Riedseltz (FR)
(86) Internationale Anmeldenummer: PCT/EP2003/003714
(87) Internationale Veröffentlichungsnummer: WO 2003/100296

(56) Entgegenhaltungen:
- EP-A- 0 617 214
- EP-A- 0 947 729

## Beschreibung

Die Erfindung betrifft einen Antrieb und ein Verfahren.

Aus der DE 100 28 046 A1 ist ein Planetengetriebe bekannt, das abtriebsseitig einen Wellenstumpf aufweist.

Aus der Norm EN ISO 9409 - 1 ist eine mechanische Schnittstelle bekannt, die abtriebsseitig bei Planetengetrieben für Industrie-Roboter vorsehbar ist und für solche bestimmt ist. Solche Planetengetriebe sind jedoch nur aufwendig und kostspielig herstellbar.

Als Standard-Getriebe werden in der vorliegenden Schrift vor allem Stirnradgetriebe oder auch Flachgetriebe bezeichnet. Aber zu solchen Standard-Getrieben sind auch Getriebe, wie Winkelgetriebe, Kegelradgetriebe, Schneckengetriebe, Spiroplangetriebe und Hypoidgetriebe, hinzufügbar, solange sie keine Planetengetriebestufen oder Zyklogetriebestufen enthalten. Solche Standard-Getriebe sind dem Fachmann aus Lehrbüchern und aus Internet-Seiten von Marktführern im Bereich industrieller Antriebstechnik wohlbekannt, beispielsweise von SEW-EURODRIVE GmbH & Co. KG.

Aus den gattungsbildenden EP 0 617 214 A ist ein Getriebe bekannt, bei dem ein Flanschteil 51 in ein Gehäuseteil verbindbar ist, wobei die zugehörigen Verbindungsschrauben 61 auf einem größeren radialen Abstand vorgesehen sind als der Außenring 63 des abtriebsseitigen Lagers. Somit sind die Verbindungsschrauben 61 von außen zugänglich und nicht geschützt. Außerdem ist der radiale Abstand des Außenrings solch kleinem radialen Abstand angeordnet, damit die Verbindungsschrauben 61 ungestört bedienbar sind. Insbesondere werden die Verbindungsschrauben 61 in die Außenseite des Flanschteils 51 eingeführt und somit dieses mit dem Gehäuseteil des Getriebes verbindbar.

Der Erfindung liegt daher die Aufgabe zugrunde, Standard-Getriebe weiterzubilden, die kompakter verwendbar und trotzdem kostengünstig sind, insbesondere bei Erweiterung einer bestehenden Baureihe, und eine höhere Biegewechselfestigkeit aufweist.

Erfindungsgemäß wird die Aufgabe bei dem Antrieb nach den in Anspruch 1 und bei dem Verfahren nach den in Anspruch 20 angegebenen Merkmalen gelöst.

Wichtige Merkmale der Erfindung bei dem Antrieb, insbesondere Elektromotor oder Standard-Getriebe, also Getriebe ohne Planetengetriebestufe, sind, dass mindestens ein Gehäuseteil und eine in einem abtriebsseitigen Lager gelagerte Abtriebswelle umfasst sind, wobei ein abtriebsseitiger Wellendichtring zur abtriebsseitigen Abdichtung vorgesehen ist,
wobei der abtriebsseitige Wellendichtring und das abtriebsseitige Lager zwischen Abtriebswelle und einem Zwischenflansch vorgesehen ist,
wobei dieser Zwischenflansch im Gehäuseteil derart vorgesehen ist, dass er
- zur Positionierung an einer als Lagersitz und Sitz für Wellendichtring geeignet ausgeführten Bohrung anliegt,
- zur Kraft- und/oder Drehmomentübertragung mittels einer lösbaren Verbindung am Gehäuseteil befestigt ist und
- zum Verbinden mit einem nicht-drehenden Teil einer anzutreibenden Vorrichtung derart bearbeitet ist, dass er Anschlussmöglichkeiten, wie Bohrlöcher, Gewindebohrungen und dergleichen, aufweist,
wobei der Radialabstand der lösbaren Verbindung zur Drehachse der Abtriebswelle kleiner ist als der Radius des Innenrings und/oder Außenrings des abtriebsseitigen Lagers und/oder des Innenradius des abtriebsseitigen Wellendichtrings.

Von Vorteil ist dabei, dass bei einer bestehenden Baureihe von Standard-Getrieben, bei der abtriebsseitig ein Gehäuseteil mit Bohrung versehen ist zur Aufnahme eines Lagersitzes und eines Wellendichtringsitzes, ein Zwischenflansch vorsehbar ist, der in der genannten Bohrung einbringbar ist und dort zentrierbar ist. Außerdem ist der Zwischenflansch am Gehäuseteil in Mitteln einer Verbindung, wie Bohrung oder dergleichen, befestigbar. Somit haben die Mittel der Verbindung, also Bohrung oder dergleichen, und die vorstehend genannte Bohrung einerseits die Funktion der Aufnahme und Befestigung des Zwischenflansches und andererseits die Funktion der Aufnahme eines Wellendichtring, eines Lagers für eine entsprechende Abtriebswelle und insbesondere die Bohrung die Funktion der kundenseitigen Befestigung, also Befestigung einer vom Standard-Getriebe angetriebenen Vorrichtung. Somit sind zumindest zwei verschiedene Varianten von Standard-Getrieben herstellbar.
Vorteile der Erfindung sind insbesondere auch, dass eine Variante mit Zwischenflansch herstellbar ist, bei der die Lager höhere Tragzahlen, wie C & Co Kennzahlen, aufweisen, die Abtriebswellen an ihrem abtriebsseitigen Ende einen großen Querschnitt, insbesondere einen viel größeren Querschnitt als bei der Variante ohne Zwischenflansch, aufweisen und der gesamte Antrieb extrem kompakt ausführbar ist. Außerdem sind hohe Abtriebsdrehmomente ermöglicht und das kundenseitige Kraftflusskollektiv ist optimal anpassbar.

Außerdem ist die Abtriebswelle abtriebsseitig vorteiligerweise nach EN ISO 9402 - 1 ausführbar. Dies ermöglicht das anschließen aller entsprechend standardisierten Vorrichtungen. Somit sind auch alle Vorteile der EN ISO 9402 - 1 erzielbar, insbesondere sind somit Standard-Getriebe als Antriebe für Industrieroboter einsetzbar und als Antriebe für Vorrichtungen, die eine mechanische Schnittstelle nach EN ISO 9402 - 1 aufweisen. Dies ist überraschend, da nur Planetengetriebe für derartige Anwendungen bekannt sind und gemäß Fachwissen kostengünstig und vorteilhaft einsetzbar sind. Jedoch sind Standard-Getriebe bei der Erfindung mit neuesten Mitteln der Technik, insbesondere konstruktive Ausführung gemäß vorliegender Erfindung zur Erzielung spielarmer oder sogar spielfreier Standard-Getriebe, derart ausführbar, dass sie auch in Industrierobotern einsetzbar sind. Besonderer Vorteil dabei, ist die kostengünstige Ausführung, da ein Standard-Getriebe viel kostengünstiger ausführbar ist als ein Planetengetriebe gleicher Leistung.

Bei der Erfindung ist dann noch der zusätzliche Vorteil vorhanden, dass bei einer bestehenden Baureihe von Standard-Getrieben unter Hinzufügung weniger Teile, wie Zwischenflansch und zusätzliche Abtriebswelle, die Variante mit Zwischenflansch fertigbar ist, also der Aufwand, das Lager, der Lagerbestand und weitere Kosten nur unwesentlich erhöht werden.

Weitere Vorteile sind bei der Erfindung, dass eine erste Variante mit Zwischenflansch herstellbar ist, bei der bei gleicher Baugröße und kundenseitiger Anforderung, also

Anforderung der angetriebenen Vorrichtung, die Lager eine höhere Lebensdauer aufweisen als bei der zweiten Variante ohne Zwischenflansch. Ebenso weist die Erfindung eine höhere Biegewechselfestigkeit auf und einen höheren Widerstand gegen Torsion und ein höheres Kippmoment.

Des Weiteren ist die Sicherheit erhöht und es sind die Kosten für einen Antrieb auch dadurch verminderbar, dass eine kleinere Baugröße bei manchen Anwendungen wählbar ist, bei denen die genannten mechanischen Daten ansonsten ausschlaggebend sind für die Wahl eines größeren Standard-Getriebes, insbesondere als vom Nennmoment aus betrachtet.

Vorteilhaft ist des Weiteren, dass der Antrieb sehr wenig Bauraum erfordert. Dabei ist insbesondere wichtig, dass die axiale Länge, die dem Antrieb in der Maschine oder Anlage zur Verfügung stehen muss, nicht nur durch die mechanische Länge des Antriebs definiert ist sondern auch das Einbauen Baulänge beansprucht. Bei der Erfindung ist nur eine besonders kleine Baulänge erforderlich, weil der Antrieb von der Seite hereingeschoben werden kann. Bei einem Standard-Antrieb nach Stand der Technik hingegen ist ein weit hervorragender Abtriebs-Wellenstumpf vorhanden. Zum Einbauen in die Kundenvorrichtung ist also entsprechend viel Baulänge notwendig. Somit bietet die Erfindung einen besonders kompakten Antrieb, der besonders wenig axiale Baulänge benötigt.

Bei einer bevorzugten Ausführung ist die als Lagersitz und Sitz für Wellendichtring geeignet ausgeführte Bohrung mit einem Einstich vorgesehen, der nach Demontage des Zwischenflansches zur Aufnahme eines Sicherungsrings für ein Lager geeignet ausgeführt ist. Von Vorteil ist dabei, dass die hohe Fertigungsgenauigkeit für beide Varianten einzuhalten ist. Somit ist das Gehäuseteil immer gleichartig zu fertigen und für beide Varianten verwendbar. Dies vermindert die Fertigungs- und Lagerkosten erheblich. Auch der gesamte Verwaltungsaufwand wird somit reduziert.

Bei einer bevorzugten Ausführung ist die Verbindung mittels Befestigungsschrauben ausgeführt und Mittel der Verbindung, wie Gewindebohrung, Verbindungsschrauben, Aufnahme oder Einpass oder dergleichen, sind nach Demontage des Zwischenflansches zur Verbindung mit einer abtriebsseitig lösbar verbindbaren, von der Abtriebswelle antreibbaren Vorrichtung verwendbar. Von Vorteil ist dabei, dass die Mittel der Verbindung ebenfalls für beide Varianten verwendbar sind. Außerdem sind industrieübliche Mittel verwendbar, wodurch die Kosten reduzierbar sind.

Bei einer bevorzugten Ausführung weist der Zwischenflansch Mittel zum Herstellen einer lösbaren Verbindung, wie Bohrung oder dergleichen, mit einer abtriebsseitig lösbar verbindbaren, von der Abtriebswelle antreibbaren Vorrichtung auf. Von Vorteil ist dabei, dass auf einem größeren Durchmesser als beim Gehäuseteil und der Variante ohne Zwischenflansch die kundenseitige Verbindung ausführbar ist. Dies hat erhebliche Vorteile bei den genannten mechanischen Kenngrößen zur Folge.

Bei einer bevorzugten Ausführung umfasst die Verbindung des Zwischenflansches mit dem Gehäuseteil Mittel zur Verbindung, wie Befestigungsschrauben und Gewindebohrung. Von Vorteil ist dabei, dass industrieübliche Mittel verwendbar sind, wodurch die Kosten reduzierbar sind. Außerdem ist die so geschaffene Schnittstelle auch verwendbar für das Anschließen der Kundenvorrichtung an die zweite Variante, also das Standard-Getriebe ohne Zwischenflansch.

Bei einer bevorzugten Ausführung ist die Abtriebswelle mit der abtriebsseitig an das Standard-Getriebe anschließbaren Vorrichtung formschlüssig verbindbar und weist zur Zentrierung eine Bohrung auf, die Länge der dadurch geschaffenen Aufnahme kleiner ist als der Durchmesser der Aufnahme. Von Vorteil ist dabei, dass die genannten mechanischen Kenngrößen, insbesondere Kippmoment und Biegewechselfestigkeit, vorteilige Werte annehmen, insbesondere vorteiligere Werte als bei der Variante ohne Zwischenflansch.

Bei einer bevorzugten Ausführung weist die Abtriebswelle abtriebsseitig eine mechanische Schnittstelle nach EN ISO 9409 - 1 auf. Von Vorteil ist dabei, dass alle Vorrichtungen mit genormter Schnittstelle anschließbar sind und die zugehörigen Vorteile erzielbar sind.

Bei einer bevorzugten Ausführung ist das Standard-Getriebe derart ausgeführt ist, dass die Abtriebswelle in das Standard-Getriebe in einer Achsrichtung montierbar ist, also bei der Montages in Achsrichtung ins Gehäuseteil einführbar ist und dabei montierbar ist. Von Vorteil ist dabei, dass die Erfindung mit wenig Aufwand fertigbar ist.

Bei einer bevorzugten Ausführung weist die Abtriebswelle im Bereich der als Lagersitz und Sitz für Wellendichtring geeignet ausgeführten Bohrung einen Absatz auf, also eine Durchmesseränderung. Von Vorteil ist dabei, dass je nach Ausführung die Abtriebswelle für die Variante mit und die Abtriebswelle für die Variante ohne Zwischenflansch jeweils einstückig fertigbar sind oder die erstgenannte Abtriebswelle unter Verwendung der letztgenannten Abtriebswelle durch Einpressen oder anderweitigen Verbindens eines Abtriebswellenabschnitts herstellbar ist.

Bei einer bevorzugten Ausführung ist ein Lager zur Lagerung für die Abtriebswelle an ihrem nicht-abtriebsseitigen Ende im Gehäuseteil, das mit dem Zwischenflansch verbunden ist, vorgesehen. Von Vorteil ist dabei, dass dasselbe Gehäuseteil verwendbar ist, also das Gehäuse des Getriebes einstückig ausführbar ist.

Bei einer bevorzugten Ausführung ist die Abtriebswelle für die erste Variante, also mit Zwischenflansch, aus der Abtriebswelle für die zweite Variante, also ohne Zwischenflansch, herstellbar, indem ein Flanschteil fest verbunden wird. Dabei ist diese Verbindung derart genau ausführbar, dass eine Endbearbeitung der so geschaffenen ersten Abtriebswelle nicht notwendig ist, sondern die vorherigen Bearbeitungen der zweiten Abtriebswelle und des Flanschteils jeweils separat durchgeführt werden können. Trotzdem ist eine genügende Genauigkeit erreichbar, insbesondere für die erste Variante.

Wichtige Merkmale der Erfindung bei dem Verfahren zum Herstellen von Getriebevarianten aus einem Bausatz für eine Baureihe von Standard-Getrieben, also Getrieben ohne Planetengetriebestufe, mit mindestens einer durch ihre Achshöhe definierten Baugrößen, sind, dass
wobei der Bausatz für jede Baugröße mindestens
- dasselbe Gehäuseteil für beide Varianten umfasst,
- ein erstes Verzahnteil das mit einer Abtriebswelle verbindbar ist,
- mindestens ein weiteres Verzahnteil, das mit dem ersten Verzahnteil in Eingriff bringbar ist, und
- weitere Teile, die mit dem weiteren Verzahnteil in Verbindung und/oder Berührung bringbar sind, insbesondere zur Bildung einer Getriebestufe und/oder mehrerer Getriebestufen des Standard-Getriebes,
umfasst,
i)
   wobei zum Herstellen der ersten Variante von Standard-Getrieben innerhalb der Baugröße der Bausatz
   - ein erstes abtriebsseitiges Lager umfasst,
   - eine erste, in dem abtriebsseitigen Lager und in einem weiteren Lager, insbesondere in einem weiter eintriebsseitig liegenden Lager, gelagerte Abtriebswelle, umfasst,
   - einen Zwischenflansch umfasst und
   - einen ersten abtriebsseitigen Wellendichtring zur abtriebsseitigen Abdichtung umfasst,
   und bei der ersten Variante der erste abtriebsseitige Wellendichtring und das erste abtriebsseitige Lager zwischen erster Abtriebswelle und dem Zwischenflansch derart vorgesehen wird, dass die Abtriebswelle im Zwischenflansch gelagert und abgedichtet ist,
   wobei dieser Zwischenflansch im Gehäuseteil derart vorgesehen und mit diesem an einer Schnittstelle derart lösbar verbunden wird, dass er
   - zur Positionierung, insbesondere also zur Zentrierung, an einer als Lagersitz und Sitz für Wellendichtring geeignet ausgeführten Bohrung im Gehäuseteil anliegt und
   - zur Kraft- und/oder Drehmomentübertragung mittels einer von der Schnittstelle umfassten, lösbaren Verbindung, umfassend Befestigungsschrauben und Verbindungsgewindebohrungen 7 am Gehäuseteil befestigt wird,
   wobei ein Radialabstand der lösbaren Verbindung zur Drehachse der Abtriebswelle, also zumindest der kleinste Radialabstand der Verbindung, kleiner ist als der Radius des Innenrings und/oder Außenrings des ersten abtriebsseitigen Lagers und/oder des Innendurchradius des ersten abtriebsseitigen Wellendichtrings,
ii)
   wobei zum Herstellen der zweiten Variante von Standard-Getrieben innerhalb der Baugröße der Bausatz
   - keinen_Zwischenflansch umfasst,
   - dasselbe Gehäuse der ersten Variante umfasst,
   - dieselben Verzahnteile der ersten Variante umfasst,
   - einen zweiten abtriebsseitigen Wellendichtring zur abtriebsseitigen Abdichtung umfasst und
   - ein zweites abtriebsseitiges Lager umfasst,
und bei der zweiten Variante der zweite abtriebsseitige Wellendichtring und das zweite abtriebsseitige Lager zwischen einer zweiten Abtriebswelle und dem Gehäuseteil an der als Lagersitz und Sitz für Wellendichtring geeignet ausgeführten Bohrung der ersten Variante vorgesehen wird,
wobei die Verbindungsgewindebohrungen 7 der lösbaren Verbindung des Gehäuseteils zum Herstellen einer lösbaren Verbindung mit einer abtriebsseitig angeordneten, vom Standard-Getriebe antreibbaren Vorrichtung verwendet werden und
an der zweiten Abtriebswelle Mittel zum Herstellen einer lösbaren Verbindung, insbesondere Passfeder, der zweiten Abtriebswelle mit einem drehbaren Teil der abtriebsseitig angeordneten, vom Standard-Getriebe antreibbaren Vorrichtung verwendet werden,
wobei der Radialabstand, also zumindest der kleinste Radialabstand, der Verbindungsgewindebohrungen 7 zur Drehachse der zweiten Abtriebswelle größer ist als der Radius des Außenrings des zweiten abtriebsseitigen Lagers und des Außenradius des zweiten abtriebsseitigen Wellendichtrings.

Von Vorteil ist dabei, dass bei einer bestehenden Baureihe von Standard-Getrieben, bei der abtriebsseitig ein Gehäuseteil mit Bohrung versehen ist zur Aufnahme eines Lagersitzes und eines Wellendichtringsitzes, ein Zwischenflansch vorsehbar ist, der in der genannten Bohrung einbringbar ist und mittels dieser zentrierbar ist. Außerdem ist der Zwischenflansch am Gehäuseteil mit Mitteln einer Verbindung, wie Bohrungen, Verbindungsschrauben und Einpass oder dergleichen, befestigbar. Somit haben die Mittel der Verbindung und die vorstehend genannte Bohrung für die Abtriebswelle des Standard-Getriebes einerseits die Funktion der Aufnahme und Befestigung des Zwischenflansches und andererseits die Funktion der Aufnahme eines Wellendichtrings, eines Lagers für eine entsprechende Abtriebswelle und insbesondere die Bohrung die Funktion der kundenseitigen Befestigung, also Befestigung einer vom Standard-Getriebe angetriebenen Vorrichtung. Somit sind zumindest zwei verschiedene Varianten von Standard-Getrieben herstellbar.

Dabei ist insbesondere vorteilhaft, dass der Zwischenflansch mittels einer entsprechenden Ausformung in diejenige Bohrung einpassbar ist, die für die Abtriebswelle des Standard-Getriebes ohne Zwischenflansch vorgesehen ist. Denn diese Bohrung ist genau gefertigt und bietet somit die Möglichkeit der genauen Positionierung der Abtriebswelle.

Des Weiteren weist das Gehäuseteil auch Bohrlöcher zum Einbringen von Verbindungsschrauben zum Verbinder der abtriebsseitig vorsehbaren, anzutreibenden Vorrichtung, insbesondere also Kundenvorrichtung, auf. Der Zwischenflansch ist erfindungsgemäß derart ausgebildet, dass er an diesen Bohrlöchern befestigbar ist. Somit sind keine zusätzlichen Vorrichtungen oder Bearbeitungsgänge zum Bereitstellen der Verbindung des Zwischenflansches notwendig.

Vorteile der Erfindung sind insbesondere auch, dass eine Variante mit Zwischenflansch herstellbar ist, bei der die Lager höhere C & Co Kennzahlen aufweisen, die Abtriebswellen an ihrem abtriebsseitigen Ende einen großen Querschnitt, insbesondere einen viel größeren Querschnitt als bei der Variante ohne Zwischenflansch, aufweisen und der gesamte Antrieb extrem kompakt ausführbar ist. Außerdem sind hohe Abtriebsdrehzahlen ermöglicht und das kundenseitige Kraftflusskollektiv ist optimal anpassbar.

Außerdem ist die Abtriebswelle abtriebsseitig vorteiligerweise nach EN ISO 9402 - 1 ausführbar. Dies ermöglicht das anschließen aller entsprechend standardisierten Vorrichtungen. Somit sind auch alle Vorteile der EN ISO 9402 - 1 erzielbar, insbesondere sind somit Standard-Getriebe als Antriebe für Industrieroboter einsetzbar und als Antriebe für Vorrichtungen, die eine mechanische Schnittstelle nach EN ISO 9402 - 1 aufweisen. Dies ist überraschend, da nur Planetengetriebe für derartige Anwendungen bekannt sind und gemäß Fachwissen vorteilhaft und kostengünstig einsetzbar sind. Jedoch sind Standard-Getriebe bei der Erfindung mit neuesten Mitteln der Technik, insbesondere konstruktive Ausführung gemäß vorliegender Erfindung zur Erzielung spielarmer oder sogar spielfreier Standard-Getriebe, derart ausführbar, dass sie auch in Industrierobotern einsetzbar sind. Besonderer Vorteil dabei ist die kostengünstige Ausführung, da ein Standard-Getriebe viel kostengünstiger ausführbar ist als ein Planetengetriebe gleicher Baugröße und Leistung.

Bei der Erfindung ist dann noch der zusätzliche Vorteil vorhanden, dass bei einer bestehenden Baureihe von Standard-Getrieben unter Hinzufügung weniger Teile, wie Zwischenflansch und zusätzliche Abtriebswelle, die Variante mit Zwischenflansch fertigbar ist, also der Aufwand, das Lager, der Lagerbestand und weitere Kosten nur unwesentlich erhöht werden.

Weitere Vorteile sind bei der Erfindung, dass eine Variante mit Zwischenflansch herstellbar ist, bei der bei gleicher Baugröße und kundenseitiger Anforderung, also Anforderung der angetriebenen Vorrichtung die Lager eine höhere Lebensdauer aufweisen als bei der Variante ohne Zwischenflansch. Ebenso weist die Erfindung eine höhere Biegewechselfestigkeit auf und einen höheren Widerstand gegen Torsion und ein höheres Kippmoment.

Des Weiteren ist die Sicherheit erhöht und es sind die Kosten für einen Antrieb auch dadurch verminderbar, dass eine kleinere Baugröße bei manchen Anwendungen wählbar ist, bei denen die genannten mechanischen Daten ansonsten ausschlaggebend sind für die Wahl eines größeren Standard-Getriebes, insbesondere als vom Nennmoment aus betrachtet.

Bei einer bevorzugten Ausführung umfasst die erste Abtriebswelle die zweite Abtriebswelle. Von Vorteil ist dabei, dass die erste Abtriebswelle unter Verwendung der zweiten Abtriebswelle herstellbar ist. Es muss also nur ein kleines, schnell, einfach und kostengünstig herstellbares Zusatzteil, also Flanschteil, mit der zweiten Abtriebswelle verbunden werden. Somit können die in der Baureihe der zweiten Variante, also die Standard-Getriebe ohne Zwischenflansch, sowieso vorhandenen Abtriebswellen in doppelter Verwendung verwendet werden.

Bei einer bevorzugten Ausführung ist die erste Abtriebswelle aus der zweit Abtriebswelle durch Verbinden derselben mit einem weiteren Abtriebswellenabschnitt, also Flanschteil, herstellbar. Von Vorteil ist dabei, dass nur der weitere Abtriebswellenabschnitt und der Zwischenflansch gefertigt werden muss und schon die mechanische Schnittstelle für Industrieroboter anbietbar ist.

Bei einer bevorzugten Ausführung ist das Verbinden ein Kleben, Schweißen und/oder ein Einpressen. Von Vorteil ist dabei, dass das Verbinden kostengünstig und genau ausführbar ist.

Bei einer bevorzugten Ausführung ist der weitere Abtriebswellenabschnitt mit Verzahnung, insbesondere Rändelung, ausgeführt, wobei die Verzahnung beim Einpressen in eine entsprechende Bohrung in der ersten Abtriebswelle oder in eine Abtriebswelle, die als Hohlwelle ausgeführt ist, spanende und/oder verformend einpressbar ist. Von Vorteil ist dabei, dass in der Baureihe vorhandene Wellen in einfacher Weise kostengünstig verwendbar sind.

Weitere vorteilhafte Ausgestaltungen ergeben sich aus den Unteransprüchen.

### Bezugszeichenliste

- 1: Abtriebswelle
- 2: Befestigungsbohrung
- 3: Wellendichtring
- 4: Lager
- 5: Zwischenflansch
- 6: Gehäuseteil
- 7: Verbindungsgewindebohrung
- 8: Verzahnteil
- 9: Lager
- 11: Verschlusskappe
- 12: Einstich für Sicherungsring
- 13: Sicherungsring
- 14: Sicherungsring
- 15: Bohrung
- 16: Sicherungsring
- 17: Distanzrohr
- 18: zylindrische Bohrung
- 19: Zentrierbohrung
- 20: Zentrierung
- 21: Abtriebswelle
- 22: Gewindebohrung
- 23: Wellendichtring
- 24: Lager
- 25: Zwischenflansch
- 33: Sicherungsring
- 35: Bohrung als Aufnahme
- 38: zylindrische Bohrung
- 39: Zentrierbohrung
- 40: Zentrierung
- 50: Zentrierung
- 51: Abtriebswelle
- 52: Flanschteil
- 53: Abtriebswelle in Hohlwellenausführung
- 54: Kegelrollenlager
- 55: Kegelrollenlager
- 71: Verbindungsschrauben
- 72: Verbindungsschrauben

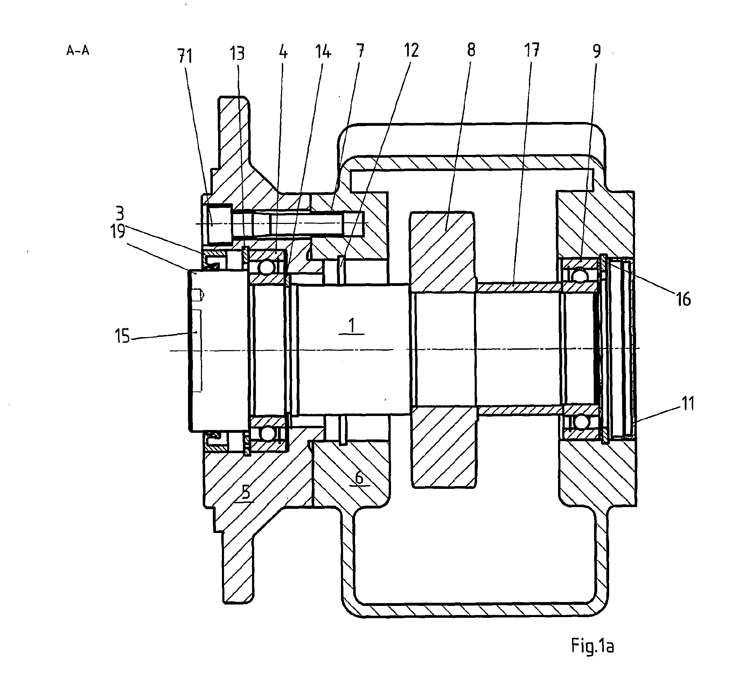

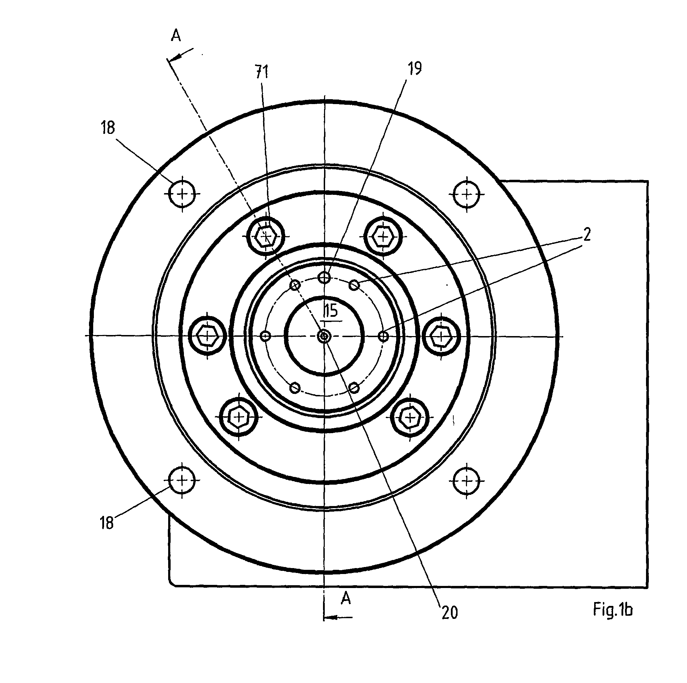

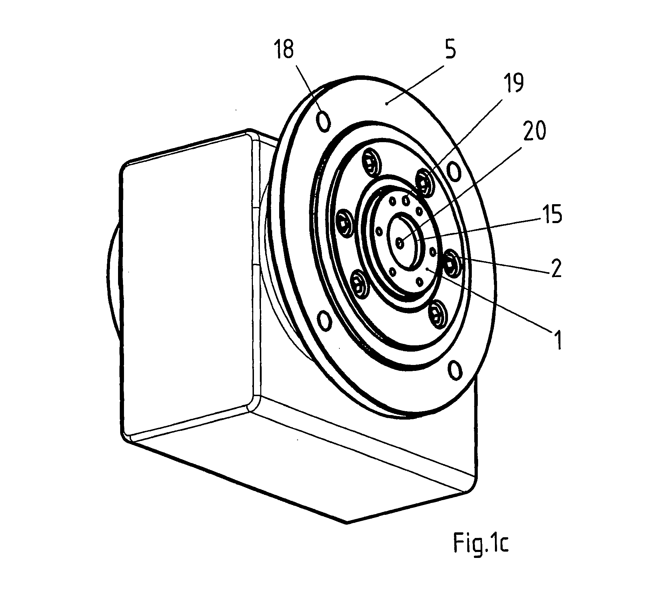

In der Figur 1, umfassend Figuren 1a, 1b, 1c, ist ein Standard-Getriebe, das nicht zur Erfindung gehört, mit einer Abtriebswelle 1 gezeigt, die über das mit ihm verbundene Verzahnteil 8 angetrieben wird. In der Figur 1 ist dieses Verzahnteil 8 als Zahnrad ausgeführt und mittels Passfeder mit der Abtriebswelle1 verbunden.

Das Gehäuseteil 6 ist bei bevorzugter Ausführung einstückig ausgeführt. Die Ausformung des Gehäuseteils 6 ist bei anderen Ausführungen auch völlig verschieden ausführbar.

Die Abtriebswelle 1 weist an ihrem abtriebsseitigen Ende einen großen maximalen Durchmesser auf. Die Abtriebswelle ist nicht im Gehäuse, also Gehäuseteil 6 sondern überraschenderweise in einem Zwischenflansch 5 mit dem abtriebsseitigen Lager 4 gelagert und mittels des Wellendichtrings 3 abgedichtet gegen die Umgebung. Dabei ist im Zwischenflansch 5 ein Sicherungsring 13 in einem zugehörigen Einstich vorgesehen, der das Lager 4 in seiner axialen Lage begrenzt. Ebenso ist in der Abtriebswelle 1 ein Sicherungsring 14 zur axialen Sicherung des Innenrings des Lagers 4 vorgesehen.

Der Fachmann erkennt die Schwierigkeit, dass Zwischenflansch 5 und Gehäuse 6 sehr genau miteinander verbunden werden müssen und die Fertigungsgüte bei der Bearbeitung des Zwischenflansches 5 und des Gehäuses 6 sehr hoch sein müssen, damit das Lager 4 und Lager 9 ausreichend genau sitzen zur korrekten Ausrichtung der Abtriebswelle 1.

Jedoch hat die Ausführung Vorteile, die die Nachteile deutlich überwiegen. Mittels der Verwendung des Zwischenflansches ist nämlich das Lager 4 sehr groß ausführbar, wie insbesondere auch durch die nachfolgenden Erläuterungen noch klarer wird. Der Zwischenflansch 5 ist nämlich entsprechend groß vorsehbar. Somit ist ein entsprechend großes Drehmoment übertragbar und es sind sogar abtriebsseitig anzutreibende Vorrichtungen, also Kundenvorrichtungen, anschließbar, die ein eintriebseitig viel größeres, maximal zulässiges Drehmoment aufweisen als das antreibende Standard-Getriebe. Somit lassen sich auch sehr große Baugrößen von Kundenvorrichtungen mit dem Standard-Getriebe antreiben.

Des Weiteren ist der Abstand zwischen Lager 4 und Lager 9 sehr groß wählbar und somit ist der Abtrieb mit größeren Querkräfte belastbar. Wie im Folgenden auch noch deutlicher wird, ist der Zwischenflansch 5 austauschbar gegen einen anderen Zwischenflansch, um eine andere Abtriebswelle vorsehbar zu machen. Somit sind verschiedene abtriebsseitige Anschlussmöglichkeiten beim selben Getriebe anbietbar, ohne dass das Gehäuse 6 auszutauschen ist. Dies gilt dann auch für die restlichen Getriebeteile, wie Verzahnungsteile und dergleichen. Insbesondere sind alle Vorstufen und der Eintrieb des Getriebes beibehaltbar! Der Vorteil ist also, dass mit geringer Teilevielfalt und somit einem geringen Lagerplatz sowie geringerem Verwaltungsaufwand eine Vielzahl von verschiedenen Anschlussmöglichkeiten für den Kunden geboten werden kann:

Die Befestigungsbohrungen 2 und 18 dienen zur Einbringung von Schrauben oder entsprechenden Mitteln zum Befestigen der abtriebsseitigen Vorrichtung. Die Befestigungsbohrungen 18 sind dabei zylindrisch ausgeführt. Die Bohrungen 2 sind als Gewindebohrungen ausgeführt. Die Bohrung 19 ist als Zentrierbohrung vorgesehen. Ebenso dient die Ausnehmung 20 zum Zentrieren der Welle beim Herstellen. Dabei ermöglichen die Befestigungsbohrungen 2 die Durchleitung von Drehmoment in die Kundenwelle und die Befestigungsbohrungen 18 dienen zur Befestigung der relativ zum Gehäuse 6 nichtdrehenden Teile der Kundenvorrichtung. Die Bohrung 15 dient zur Aufnahme und Zentrierung der Kundenwelle, also der abtriebsseitig anschließbaren, von dem Standard-Getriebe angetriebenen Welle. Wie aus der Figur 1a und 1 c ersichtlich ist, ermöglicht die Ausformung des Zwischenflansches 5 vorteiligerweise, die Befestigungsbohrungen 18 auf sehr großem Durchmesser vorzusehen.

Der Zwischenflansch 5 trägt eine Bohrung 18 zur Verbindung und Befestigung der Gehäuseteile der abtriebsseitigen, also kundenseitigen Vorrichtung. Der Zwischenflansch 5 ist mit Befestigungsschrauben 71 in den Verbindungsgewindebohrungen 7 am Gehäuseteil 6 befestigt. Das Gehäuseteil weist einen Einstich 12 für einen Sicherungsring auf, wobei allerdings kein Sicherungsring in Figur 1 a eingebaut ist.

Die Abtriebswelle 1 ist an ihrem anderen Ende über das Lager 9 in dem Gehäuseteil 6 gelagert, wobei der Außenring des Lagers 9 mittels des Sicherungsrings 16 in seiner axialen Lage gehalten ist.

Die Verschlusskappe 11 dichtet das Standard-Getriebe gegen die Umgebung ab.

Das Standard-Getriebe gemäß Figur 1 a, 1 b und 1 c weist also eine abtriebsseitige Schnittstelle nach EN ISO 9409 - 1 auf. Insbesondere ist das Bohrungsbild entsprechend ausgeführt. Dies ist für den Fachmann überraschend, weil die genannte Schnittstelle eine mechanische Schnittstelle für Industrieroboter ist. Sie ist aufwendig und kostspielig und wird schon daher im Stand der Technik nur bei Planetengetriebe vorgesehen. Darüber hinaus sind die Anforderungen bei Robotern hinsichtlich Kompaktheit und entsprechender Querkraft groß, wobei die Schnittstelle nach der Norm entsprechend leistungsfähig ist.

Bei der vorliegenden Erfindung wird dagegen diese aufwendige und kostspielige Schnittstelle bei einem Standard-Getriebe, also beispielsweise Stirnradgetriebe, Winkelgetriebe wie Kegelgetriebe, Spiroplangetriebe, oder dergleichen, angeboten. Bei der vorliegenden Erfindung sind die mit dem Anbieten der Schnittstelle entstehenden Kosten und der Aufwand äußerst gering. Denn das Standard-Getriebe nach Stand der Technik wird in einfacher Weise abtriebsseitig abgeändert in erfindungsgemäßer Art und Verwendung. Es wird nämlich nur die Abtriebswelle ausgetauscht, das abtriebsseitige Lager und der abtriebsseitige Wellendichtring und dergleichen herausgenommen und die für die Erfindung notwendigen Komponenten eingesetzt, wie insbesondere der Zwischenflansch 5 und die Abtriebswelle 1. Somit ist der nach Stand der Technik nötige Aufwand und die Kosten überwunden und wesentliche Vorteile bei einem Standard-Getriebe erzielbar.

Insbesondere sind nun vorteiligerweise
- auch kostengünstige Standard-Getriebe bei Robotern verwendbar,
- es ist ein großer Querschnitt der Abtriebswelle zur anzutreibenden Vorrichtung hin anbietbar,
- Lager mit höheren C&Co Kennzahlen sind einbaubar,
- eine kompaktere Konstruktion ist ausführbar, weil die Übergabe des Drehmomentes an die anzutreibende Vorrichtung weniger Bauraum benötigt,
- es sind höhere Drehmomente bei der Mitnahme erlaubt,
- der Kunde kann sein Kraftflusskollektiv optimiert gestalten,
- das Lager hat eine höhere Lebensdauer,
- die Biegewechselfestigkeit der Abtriebswelle ist erhöht,
- höhere Torsionssteifigkeit ist vorhanden,
- ein höheres maximal zulässiges Kippmoment ist vorhanden,
- die Sicherheit ist erhöht,
- bei gewissen Anwendungen ist eine kleinere Baugröße des Standard-Getriebes ist verwendbar, wenn die entsprechenden mechanischen Größen dies zulassen,
- der Planlauf ist verbessert und somit eine präzisere Positionierung beim Antreiben erreichbar.

Bei anderen Anwendungen sind jedoch Getriebe mit abtriebsseitigem Wellenschaft erforderlich. Bei dem erfindungsgemäßen Ausführungsbeispiel ist vorteiligerweise auch diese Form der abtriebsseitigen Schnittstelle herstellbar. Dazu weist dann das Gehäuseteil 6 einen Einstich 12 auf, welcher im erfindungsgemäßen Ausführungsbeispiel nach Figur 1 keine mechanische Wirkfunktion aufweist.

Nach Herausnehmen der Abtriebswelle 1 und des Zwischenflansches 5 ist nämlich das Gehäuseteil 6 zur Aufnahme eines Lagers und Wellendichtrings vorgesehen, wobei dieses Lager und dieser Wellenrichtring nicht in den Figuren gezeigt ist, da solche Getriebe im Stand der Technik bekannt sind. Für den zugehörigen Sicherungsring zur axialen Sicherung dieses eingebauten Lagers ist der Einstich 12 vorgesehen. Somit ist das Gehäuseteil 6 und auch das ganze restliche Standard-Getriebe für verschiedene abtriebsseitigen Schnittstellen vorsehbar, ohne dass das Gehäuseteil 6 und auch das ganze restliche Standard-Getriebe abgeändert werden müsste.

Wesentlich ist dabei die Ausführung und Dimensionierung des Gehäuseteils 6. Denn dieses bietet die Verbindungsgewindebohrung 7 als Aufnahme für den Zwischenflansch 5 an. Diese Schnittstelle zur Herstellung einer Verbindung ist nach Abmontieren des Zwischenflansches 5 aber die abtriebsseitige Schnittstelle zur Verbindung mit den nichtdrehenden Teilen der angetriebenen Vorrichtung, wie Gehäuseteile oder das gesamte Gehäuse, also Vorrichtung des Kunden. Somit hat die Verbindungsgewindebohrung 7 eine Doppelfunktion je nach abtriebsseitiger Variante des Standard-Getriebes.

Die lösbare Verbindung umfasst die Verbindungsgewindebohrungen im Gehäuseteil 6 und ermöglicht mittels des Einschraubens der Verbindungsschrauben 71 das Herstellen einer Verbindung.

Wesentlich ist auch die Doppelfunktion des im Bereich des Einstichs 12 vorhandenen Lagersitzes und Wellendichtringsitzes bei der anderen, oben erwähnten, nicht in den Figuren gezeigten Variante. Denn der Bereich des Lagersitzes und Wellendichtringsitzes bildet einen Sitz zur Aufnahme des Zwischenflansches und zentriert diesen sehr genau. Ein Wellendichtringsitz ist nämlich stets entsprechend genau bearbeitet. Somit ist für den Zwischenflansch 5 der Bereich des Lagersitzes und Wellendichtringsitzes zum Positionieren vorgesehen. Der genannte Bereich ist bei beiden Varianten präzise und hochgenau gefertigt. Daher ist wiederum überraschenderweise das Gehäuseteil 6 unverändert in beiden Varianten einsetzbar.

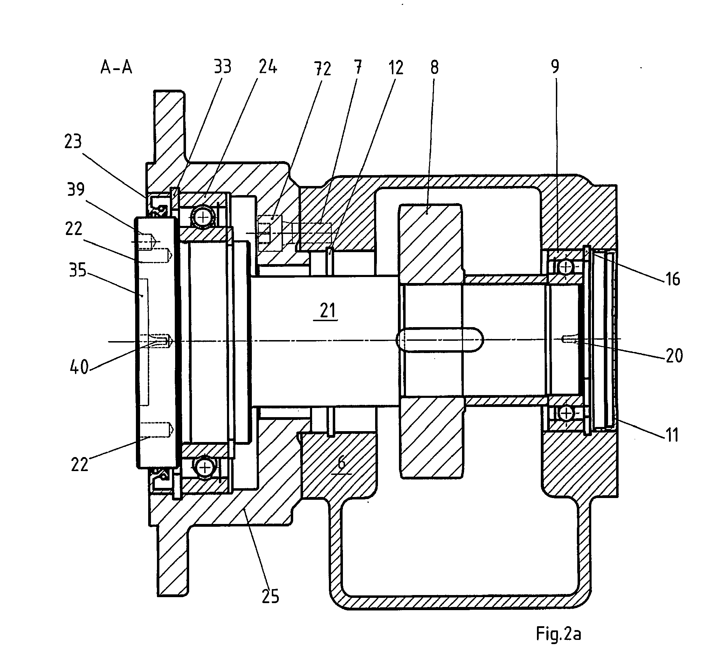

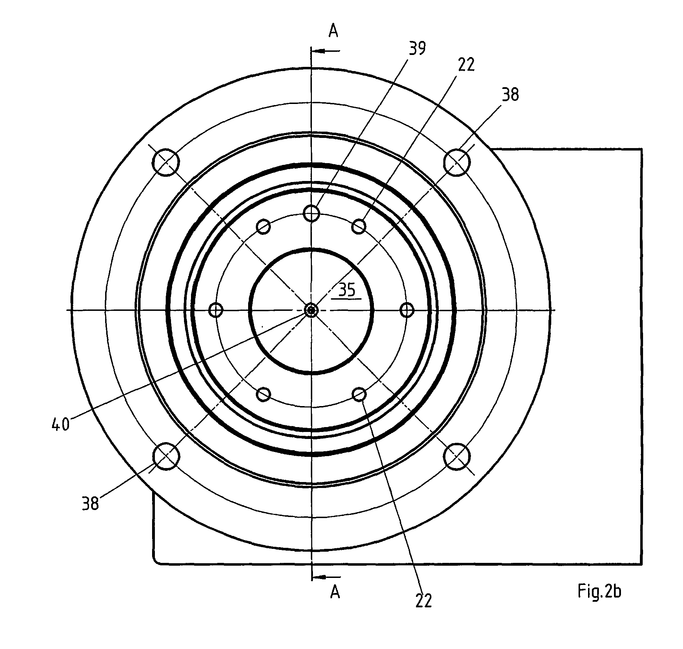

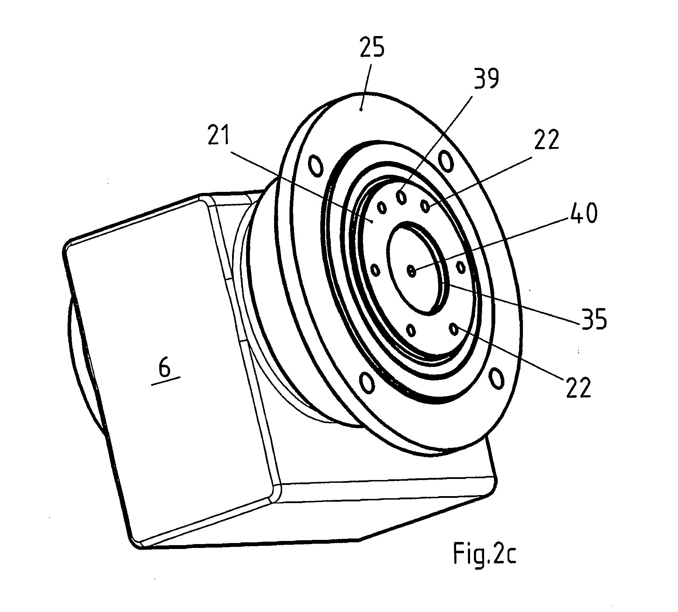

In den Figuren 2a, 2b und 2c ist ein erfindungsgemäßes Ausführungsbeispiel gezeigt, wobei das abtriebsseitige Lager 24 auf einem größeren Durchmesser sitzt als die Verbindungsgewindebohrung 7.

Bei anderen erfindungsgemäßen Ausführungsbeispielen ist der Innendurchmesser des Lagers 24 beziehungsweise der Durchmesser des Innenring-Lagersitzes des Lagers 24 sogar größer als der größte Radialabstand der Verbindungsgewindebohrung 7. Dann ist das Lager 24 mit völlig anderen Kräften belastet als bei Ausführungen, bei denen das Lager 24 auf kleinerem Durchmesser als die Verbindungsgewindebohrung 7, wie beispielsweise insbesondere bei Ausführungen nach Figur 1 a. Dazu ist das Lager 24 speziell konstruiert und ausgeführt. Somit sind sogar abtriebsseitige Vorrichtungen anschließbar, die einer größeren Baugröße zugehören, also mit mehr Drehmoment, insbesondere mit mindestens zweimal mehr Drehmoment, antreibbar sind als das erfindungsgemäße Getriebe zu liefern vermag, weil sein maximal zulässiges Drehmoment überschritten wäre.

Wesentlich ist bei der Figur 2a, 2b und 2c weiter, dass das Lager 24 auf einem größeren Durchmesser sitzt als der für die Aufnahme des Lagers und des Wellendichtrings vorgesehene, um den Einstich 12 herum liegende Bereich. Insbesondere ist der Innendurchmesser des Lagers 24 größer als der Durchmesser der Bohrung im Gehäuseteil 6, die die abtriebsseitige Öffnung im Gehäuseteil 6 für die Abtriebswelle 1 darstellt.

Zur Zentrierung der abtriebsseitigen Vorrichtung mit einer Welle, nachfolgend auch als Kundenwelle bezeichnet, wird bei dem erfindungsgemäßen Ausführungsbeispiel nach Figur 1 die Aufnahme 15 in der Abtriebswelle 1 derart ausgeführt, dass die Länge der Aufnahme 15 kleiner ist als der Durchmesser der Aufnahme 15. Die Mitnahme ist durch eine formschlüssige Verbindung 19 ausgeführt. Es ist somit eine Flächenauflage kundenseitig vorgesehen.

Bei der anderen, oben erwähnten, nicht in den Figuren gezeigten Variante ohne Zwischenflansch hingegen wird die Kundenwelle derart aufgenommen, dass die Länge der Aufnahme größer ist als der Durchmesser der Aufnahme ist. Dabei dient ein Axialanschlag zur axialen Positionierung der Aufnahme gegenüber dem Standard-Getriebe. Die Mitnahme ist formschlüssig ausgeführt. Es ist aber auch ein Reibschluss zur Mitnahme verwendbar bei anderen Varianten.

In dem erfindungsgemäßen Ausführungsbeispiel nach Figur 2a, 2b, 2c ist der Wellendichtring 23 größer ausgeführt als in der Figur 1 a, 1 b, 1 c.

Die Abtriebswelle 21 in dem erfindungsgemäßen Ausführungsbeispiel nach Figur 2a, 2b, 2c ist wiederum als Vollwelle ausgeführt, die wegen des größeren abtriebsseitigen Durchmessers in einem größeren Lager 24 gelagert ist mit entsprechend größerem Sicherungsring 33.

Die Gewindebohrung 22 dient zur Befestigung des drehenden Teils der anzuschließenden Kundenvorrichtung, wobei die Abtriebswelle eine entsprechend große Bohrung 35 als Aufnahme der Kundenwelle umfasst. Die zylindrischen Bohrungen 38 und die Zentrierbohrung 39 sind wiederum entsprechend der Norm ausgeführt, allerdings auf größerem Durchmesser als in Figur 1a, 1b, 1c.

Der Zwischenflansch 25 ist ebenfalls abtriebsseitig mit einem größeren Durchmesser ausgeführt. Eintriebsseitig weist er jedoch die selbe Schnittstelle zum Gehäuseteil 6 auf.

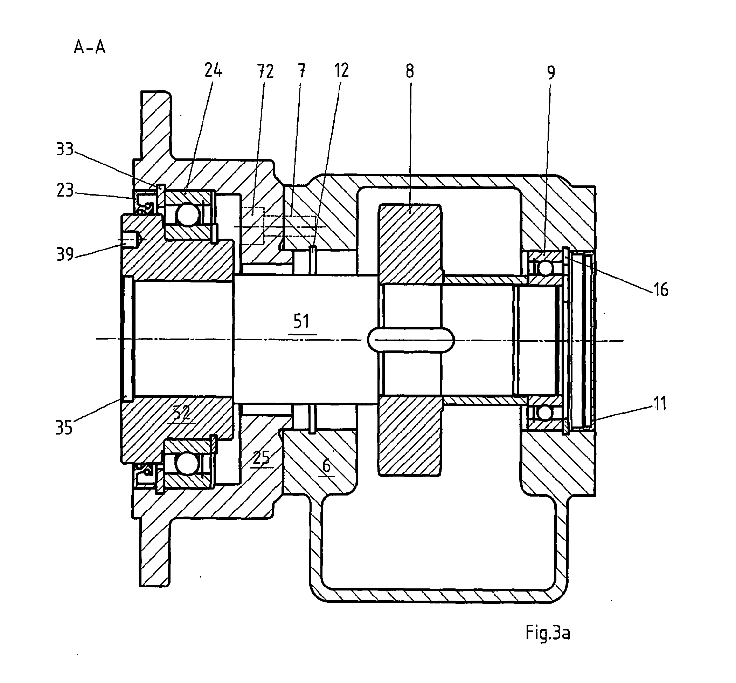

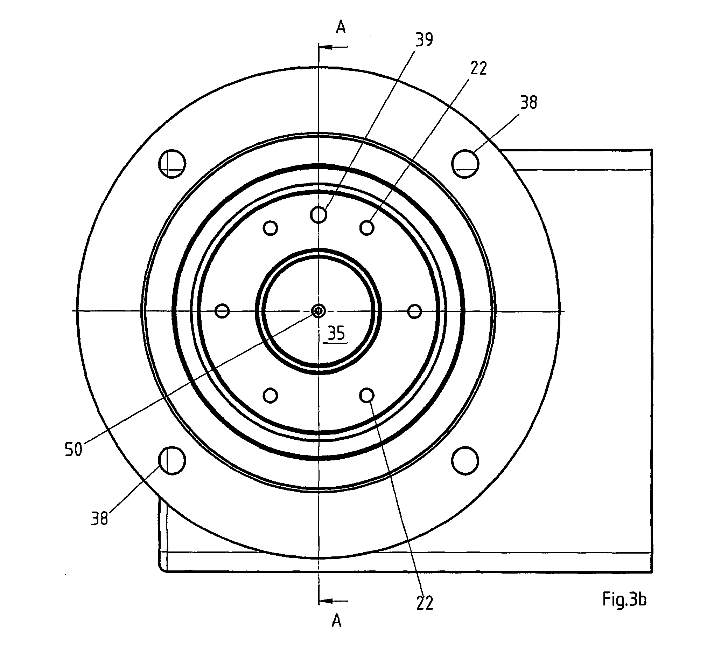

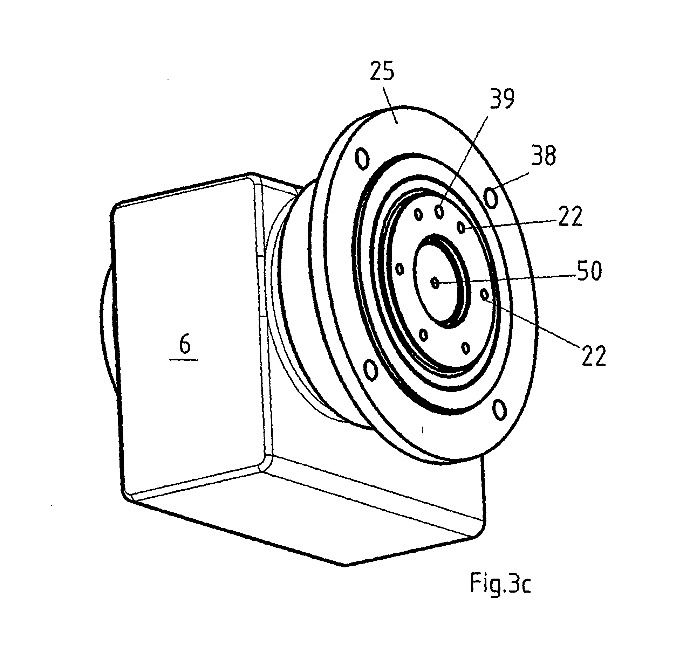

In der Figur 3a, 3b, 3c ist ein der Figur 2a, 2b 2c entsprechendes erfindungsgemäßes Ausführungsbeispiel gezeigt. Dabei ist die Abtriebswelle zweigeteilt ausgeführt, indem ein Flanschteil 52 mit einer Abtriebswelle 51 fest verbunden ist. Vorteiligerweise ist somit die Abtriebswelle noch einfacher und kostengünstiger herstellbar, weil wenig Material abzuspanen ist beim Herstellen. Das Flanschteil 52 bietet den großen Durchmesser und ist ebenfalls mit wenig abzuspanendem Material herstellbar. Relativ zur Abtriebswelle nach Figur 2a sind also weitere Einsparmöglichkeiten vorsehbar und erreichbar. Außerdem ist somit eine weitere Schnittstelle geschaffen, die das Verbinden verschiedener Flanschteile 52 ermöglicht und somit verschiedene Varianten von abtriebsseitig anzuschließenden Vorrichtungen vorsehbar macht.

Das Flanschteil 52 ist mit der Abtriebswelle 51 verschweißt. Es ist aber auch vorteilhaft ein Einpressen als Verbindung möglich.

Die Kundenvorrichtung ist mittels der Zentrierung 50 genau verbindbar.

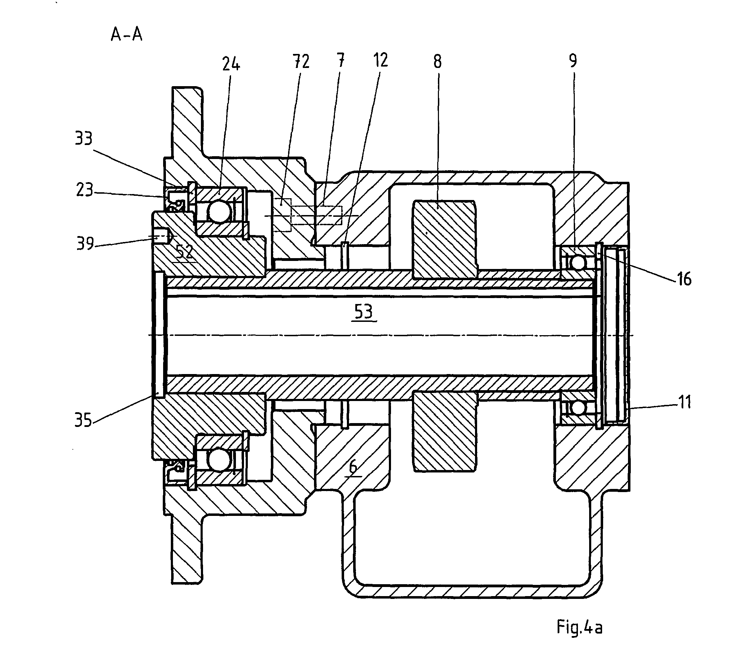

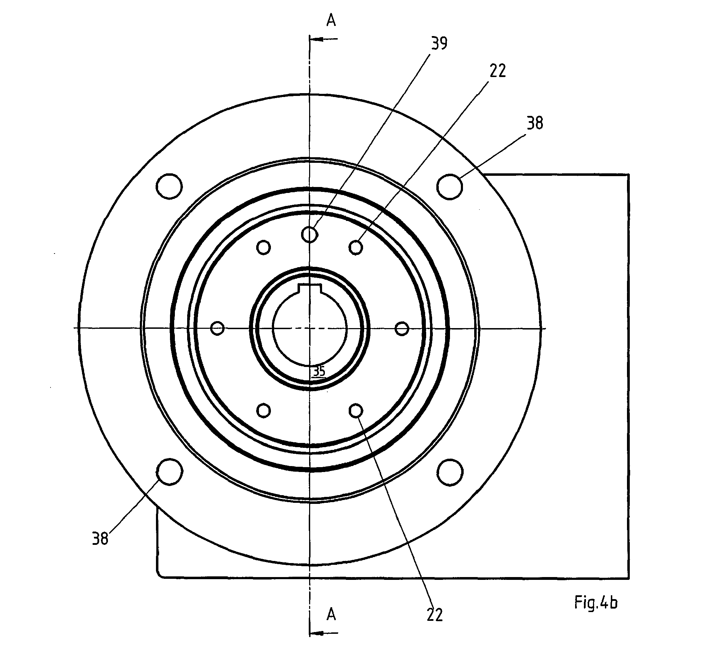

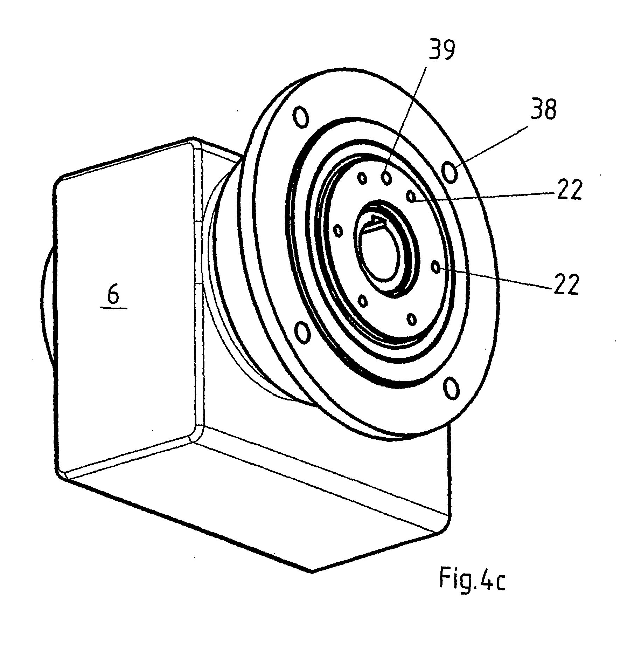

In den Figuren 4a, 4b, 4c ist eine Hohlwellenausführung gezeigt. Dabei ist die als Vollwelle ausgeführte Abtriebswelle 51 der Figuren 3a, 3b, 3c nun als Hohlwelle, also Abtriebswelle in Hohlwellenausführung 53, ausgeführt. Somit kann dem Kunden auch noch eine solche Bauart angeboten werden, wobei nur ein Teil, nämlich die Welle auszutauschen ist. Die abtriebsseitig anzuschließenden Vorrichtungen sind mittels Passfederverbindung antreibbar und/oder in der vorstehend beschriebenen Weise mittels der genormten Schnittstelle.

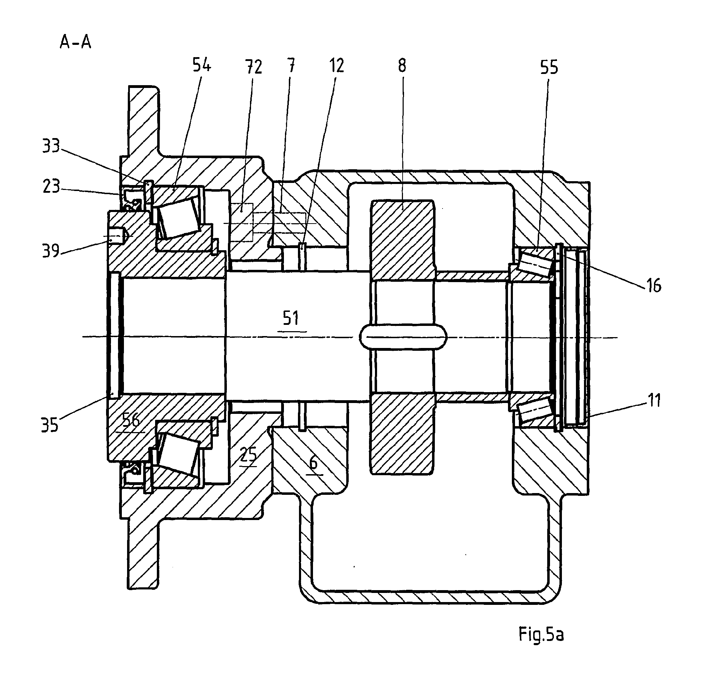

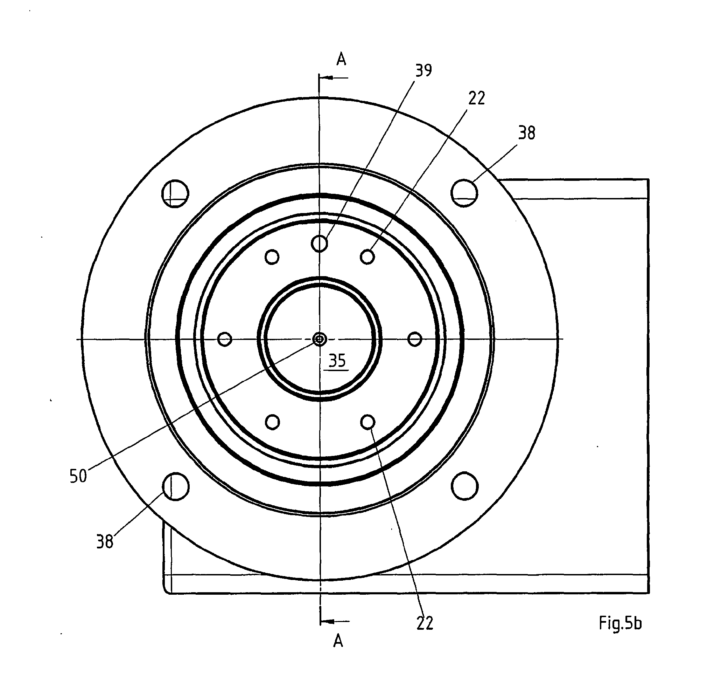

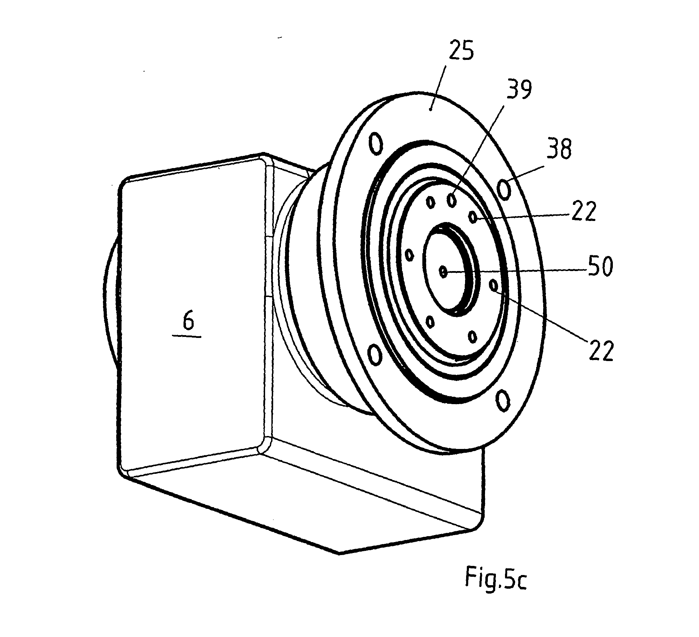

In den Figuren 1 a bis 4c sind Kugelrollenlager eingezeichnet. In dem Ausführungsbeispiel nach Figuren 5a, 5b, 5c sind diese Lager auch austauschbar gegen ein- und abtriebsseitige Kegelrollenlager 54 und 55. Somit sind Spielverminderung und Aufnahme von Kräften, insbesondere Axialkräften, verbessert.

Die Verbindungsgewindebohrungen 7 werden von der Schnittstelle im Gehäuseteil 6 umfasst und werden daher stets gleich ausgeführt sind. Die darin einzuschraubenden Verbindungsschrauben (71, 72) sind je nach Ausführung verschieden lang ausführbar.

Besonders vorteilhaft ist die Erfindung bei Getrieben, die mindestens eine Winkelgetriebestufe aufweisen, da dabei der genannte Vorteil der benötigten geringeren Baulänge, insbesondere hinsichtlich des Einbauens besonders wichtig ist. Dabei ist besonders wichtig, dass die in Richtung der Achse der Abtriebswelle benötigte Baulänge gering ist, wobei diese nicht in Richtung der Achse des das Standard-Getriebe antreibenden Elektromotors ausgerichtet ist.

Bei dem erfindungsgemäßen Ausführungsbeispiel nach allen Figuren ist besonders vorteilig, dass Lager mit hohen Tragzahlen, wie C&Co Kennzahlen, insbesondere höheren als beim Stand der Technik und/oder bei der zweiten Variante, verwendbar sind. Außerdem sind Kundenwellen mit großen Querschnitten, insbesondere größeren als beim Stand der Technik und/oder bei der zweiten Variante, verwendbar. Außerdem ist der gesamte Antrieb kompakter als bei Verwendung der Variante nach Stand der Technik bei gleicher Baugröße. Des Weiteren ist der abtriebsseitige Kraftfluss und somit das gesamte Kraftflusskollektiv an die kundenseitigen Anforderungen anpassbar und optimierbar. Zusätzlich ist abtriebsseitig ein hohes Drehmoment abgebbar, da der abtriebsseitige Durchmesser sehr viel größer ist als bei der anderen Variante.

Bei gleicher Baugröße und Anforderung der kundenseitigen Anwendung weist das Lager 24 nun bei dem erfindungsgemäßen Ausführungsbeispiel eine höhere Lebensdauer, eine höhere Biegewechselfestigkeit der Abtriebswelle und der kundenseitigen Welle, einen höheren Widerstand gegen Torsion und ein höheres Kippmoment der Abtriebswelle und der kundenseitigen Welle auf.

Die Betriebssicherheit ist bei dem erfindungsgemäßen Ausführungsbeispiel erhöht und die Kosten des gesamten Antriebs sind verringerbar, weil die Auswahl der eingesetzten Variante wegen der vorgenannten Vorteile der Erfindung nun zu einem anderen Ergebnis führt, insbesondere zu einem Getriebe kleinerer Baugröße und somit erheblich geringerer Kosten.

Die Abtriebswelle und die kundenseitige Welle sind bei dem erfindungsgemäßen Ausführungsbeispiel präziser positionierbar. Der Anschluss und die Schnittstelle sind extrem kompakt ausgeführt und ermöglichen somit viel weniger Bauvolumen des gesamten Antriebs. In Zusammenwirkung mit der vorgenannten geänderten Auswahl ergibt sich ein multiplikativer Effekt, der somit zu einem noch geringeren Bauvolumen mit den zugehörigen Vorteilen führt, wie beispielsweise Kostenverringerung und dergleichen.

Die Abtriebswelle ist durch die abtriebsseitige Aufweitung kostspieliger und aufwendiger zu fertigen als bei der zweiten Variante. Denn es ist ein hohes Materialvolumen abzutragen, insbesondere ein hohes Spanvolumen abdrehen und/oder zu drehen. Außerdem müssen die Standard-Getriebe derart ausgelegt werden, dass die Montage in einer Achsrichtung ausführbar ist. Auch die genannten Lager und Wellendichtringe sind keine üblichen sondern speziell anzufertigende Komponenten. Dies würde üblicherweise einen Fachmann abhalten, die Erfindung zu fertigen. Es hat sich jedoch überraschenderweise herausgestellt, dass der gesamte Antrieb kostengünstiger wird. Die obengenannten Vorteile kompensieren nämlich insbesondere die genannten höheren Fertigungskosten für die Abtriebswelle 1. Dies gilt insbesondere bei von Elektromotoren angetriebenen Getrieben mit einer Leistung von etwa 120 W bis 200 kW.

Wesentlich ist bei der Erfindung auch, dass bei einer bestehenden Baureihe für Standard-Getriebe nach Stand der Technik mit nur wenigen zusätzlichen Teilen dem Kunden eine enorme Menge von abtriebsseitigen Schnittstellen angeboten werden kann.

Bei weiteren erfindungsgemäßen Ausführungsbeispielen wird die Abtriebswelle des Standard-Getriebes, *das nicht in den Figuren gezeigt ist,* als zweite Welle mit dem Flanschteil verbunden und somit eine erste Abtriebswelle erzeugt, die in den Ausführungsbeispielen nach Figuren 3a, 4a, 5a als Abtriebswelle verwendbar ist.

Anstatt der lösbaren Verbindung, umfassend die Verbindungsgewindebohrungen 7, sind auch andersartige ähnlich wirkende Mittel zum Herstellen einer Verbindung vorteilhaft verwendbar.

## Patentansprüche

1. Antrieb,
umfassend mindestens ein Gehäuseteil (6) und eine in einem abtriebsseitigen Lager (24) gelagerte Abtriebswelle (21), wobei ein abtriebsseitiger Wellendichtring (23) zur abtriebsseitigen Abdichtung vorgesehen ist,
wobei der abtriebsseitige Wellendichtring (23) und das abtriebsseitige Lager (24) zwischen Abtriebswelle (21) und einem Zwischenflansch (25) vorgesehen ist,
wobei dieser Zwischenflansch im Gehäuseteil derart vorgesehen ist, dass er
- zur Positionierung an einer als Lagersitz und Sitz für Wellendichtring geeignet ausgeführten Bohrung anliegt,
- mittels einer lösbaren Verbindung (72) am Gehäuseteil befestigt ist, insbesondere zur Kraft- und/oder Drehmomentübertragung, und
- zum Verbinden mit einem nicht-drehenden Teil einer anzutreibenden Vorrichtung derart bearbeitet ist, dass er Anschlussmöglichkeiten (38), wie Bohrlöcher, Gewindebohrungen und dergleichen, aufweist,
**dadurch gekennzeichnet, dass** der Radialabstand der lösbaren Verbindung zur Drehachse kleiner ist als der Radius des Innenrings und/oder Außenrings des abtriebsseitigen Lagers (24) und/oder des Innenradius des abtriebsseitigen Wellendichtrings (23).

2. Antrieb nach Anspruch 1,
**dadurch gekennzeichnet, dass**
der Antrieb ein Standard-Getriebe, also Getriebe ohne Planetengetriebestufe, ist.

3. Antrieb nach mindestens einem der vorangegangenen Ansprüche,
**dadurch gekennzeichnet, dass**
die als Lagersitz und Sitz für Wellendichtring geeignet ausgeführte Bohrung ein Einstich (12) vorgesehen ist, der nach Demontage des Zwischenflansches zur Aufnahme eines Sicherungsrings für ein Lager geeignet ausgeführt ist,
wobei diese Bohrung zur Aufnahme als Lagersitz für dieses Lager entsprechend bearbeitet und vorsehbar ist.

4. Antrieb nach mindestens einem der vorangegangenen Ansprüche,
**dadurch gekennzeichnet, dass**
die lösbare Verbindung mindestens Befestigungsschrauben (72) und zugehörige Verbindungsgewindebohrungen (7) umfasst, die nach Demontage des Zwischenflansches zur Verbindung mit der abtriebsseitig lösbar verbindbaren, von der Abtriebswelle antreibbaren Vorrichtung verwendbar sind.

5. Antrieb nach mindestens einem der vorangegangenen Ansprüche,
**dadurch gekennzeichnet, dass**
der Zwischenflansch Mittel zum Herstellen einer weiteren lösbaren Verbindung, wie Bohrung oder dergleichen, mit einer abtriebsseitig lösbar verbindbaren, von der Abtriebswelle antreibbaren Vorrichtung aufweist.

6. Antrieb nach mindestens einem der vorangegangenen Ansprüche,
**dadurch gekennzeichnet, dass**
die Verbindung des Zwischenflansches mit dem Gehäuseteil Mittel zur Verbindung, wie Befestigungsschrauben (72) und Verbindungsgewindebohrungen (7), umfasst.

7. Antrieb nach mindestens einem der vorangegangenen Ansprüche,
**dadurch gekennzeichnet, dass**
die Abtriebswelle mit der abtriebsseitig an das Standard-Getriebe anschließbaren Vorrichtung formschlüssig verbindbar ist und zur Zentrierung eine Bohrung aufweist, die Länge der **dadurch** geschaffenen Aufnahme kleiner ist als der Durchmesser der Aufnahme.

8. Antrieb nach mindestens einem der vorangegangenen Ansprüche,
**dadurch gekennzeichnet, dass**
die Abtriebswelle abtriebsseitig eine mechanische Schnittstelle für Industrieroboter gemäß EN ISO 9409 - 1 aufweist.

9. Antrieb nach mindestens einem der vorangegangenen Ansprüche,
**dadurch gekennzeichnet, dass**
die Abtriebswelle von einem mit der Abtriebswelle lösbar verbundenen Zahnrad oder einem anderen, entsprechend verbundenen Verzahnungsteil angetrieben wird.

10. Antrieb nach mindestens einem der vorangegangenen Ansprüche,
**dadurch gekennzeichnet, dass**
das Standard-Getriebe derart ausgeführt ist, dass die Abtriebswelle in das Standard-Getriebe in einer Achsrichtung montierbar ist.

11. Antrieb nach mindestens einem der vorangegangenen Ansprüche,
**dadurch gekennzeichnet, dass**
die Abtriebswelle im Bereich der als Lagersitz und Sitz für Wellendichtring geeignet ausgeführten Bohrung einen Absatz aufweist, also eine Durchmesseränderung.

12. Antrieb nach mindestens einem der vorangegangenen Ansprüche,
**dadurch gekennzeichnet, dass**
ein Lager zur Lagerung für die Abtriebswelle an ihrem nicht-abtriebsseitigen Ende, also eintriebsseitigen Ende im Gehäuseteil, das mit dem Zwischenflansch verbunden ist, vorgesehen ist.

13. Antrieb nach mindestens einem der vorangegangenen Ansprüche,
**dadurch gekennzeichnet, dass**
zur Herstellung der Abtriebswelle ein rebgeschweißter und/oder geschmiedeter Rohling verwendbar ist.

14. Antrieb nach mindestens einem der vorangegangenen Ansprüche,
**dadurch gekennzeichnet, dass**
die Abtriebswelle zur Kostenreduzierung bei der Fertigung mindestens zweiteilig ausgeführt ist.

15. Antrieb nach mindestens einem der vorangegangenen Ansprüche,
**dadurch gekennzeichnet, dass**
zur zweiteiligen Ausführung ein Flanschteil mit dem abtriebsseitigen Ende der Abtriebswelle fest verbunden ist,

16. Antrieb nach mindestens einem der vorangegangenen Ansprüche,
**dadurch gekennzeichnet, dass**
beim Herstellen das feste Verbinden des Flanschteils mit der Abtriebswelle mittels Schweißverbindung, Pressverband und/oder Klebeverbindung vorgesehen ist.

17. Antrieb nach mindestens einem der vorangegangenen Ansprüche,
**dadurch gekennzeichnet, dass**
beim Herstellen nach dem festen Verbinden zumindest die Lagerstellen endbearbeitet und/oder geschliffen sind.

18. Antrieb nach mindestens einem der vorangegangenen Ansprüche,
**dadurch gekennzeichnet, dass**
der Antrieb ein Elektromotor ist oder umfasst und die Abtriebswelle eine Rotorwelle.

19. Antrieb nach mindestens einem der vorangegangenen Ansprüche,
**dadurch gekennzeichnet, dass**
der Elektromotor als Mehrphasenmotor zum direkten Antreiben einer Last ausgeführt ist, insbesondere ohne einem zwischen Elektromotor und Last angeordneten Getriebe.

20. Herstellverfahren zum wahlweise Herstellen einer ersten oder zweiten Getriebevariante aus einem Bausatz für eine Baureihe von Standard-Getrieben, also Getrieben ohne Planetengetriebestufe, mit mindestens einer durch ihre Achshöhe definierten Baugrößen,
wobei der Bausatz für jede Baugröße mindestens
- dasselbe Gehäuseteil für beide Varianten umfasst,
- ein erstes Verzahnteil das mit einer Abtriebswelle verbindbar ist,
- mindestens ein weiteres Verzahnteil, das mit dem ersten Verzahnteil in Eingriff bringbar ist, und
- weitere Teile, die mit dem weiteren Verzahnteil in Verbindung und/oder Berührung bringbar sind, insbesondere zur Bildung einer Getriebestufe und/oder mehrerer Getriebestufen des Standard-Getriebes,
umfasst,
i)
wobei zum Herstellen der ersten Variante von Standard-Getrieben innerhalb der Baugröße der Bausatz
- ein erstes abtriebsseitiges Lager umfasst,
- eine erste, in dem abtriebsseitigen Lager und in einem weiteren Lager, insbesondere in einem weiter eintriebsseitig liegenden Lager, gelagerte Abtriebswelle, umfasst,
- einen Zwischenflansch umfasst und
- einen ersten abtriebsseitigen Wellendichtring zur abtriebsseitigen Abdichtung umfasst,
und bei der ersten Variante der erste abtriebsseitige Wellendichtring und das erste abtriebsseitige Lager zwischen erster Abtriebswelle und dem Zwischenflansch derart vorgesehen wird, dass die Abtriebswelle im Zwischenflansch gelagert und abgedichtet ist,
wobei dieser Zwischenflansch im Gehäuseteil derart vorgesehen und mit diesem an einer Schnittstelle derart lösbar verbunden wird, dass er
- zur Positionierung, insbesondere also zur Zentrierung, an einer als Lagersitz und Sitz für Wellendichtring geeignet ausgeführten Bohrung im Gehäuseteil anliegt und
- zur Kraft- und/oder Drehmomentübertragung mittels einer von der Schnittstelle umfassten, lösbaren Verbindung, umfassend Befestigungsschrauben und Verbindungsgewindebohrungen 7 am Gehäuseteil befestigt wird,
wobei der Radialabstand der lösbaren Verbindung zur Drehachse kleiner ist als der Radius des Innenrings und/oder Außenrings des abtriebsseitigen Lagers und/oder des Innenradius des abtriebsseitigen Wellendichtrings,
ii)
wobei zum Herstellen der zweiten Variante von Standard-Getrieben innerhalb der Baugröße der Bausatz
- keinen_Zwischenflansch umfasst,
- dasselbe Gehäuse der ersten Variante umfasst,
- dieselben Verzahnteile der ersten Variante umfasst,
- einen zweiten abtriebsseitigen Wellendichtring zur abtriebsseitigen Abdichtung umfasst und
- ein zweites abtriebsseitiges Lager umfasst,
und bei der zweiten Variante der zweite abtriebsseitige Wellendichtring und das zweite abtriebsseitige Lager zwischen einer zweiten Abtriebswelle und dem Gehäuseteil an der als Lagersitz und Sitz für Wellendichtring geeignet ausgeführten Bohrung der ersten Variante vorgesehen wird,
wobei die Verbindungsgewindebohrungen (7) der lösbaren Verbindung des Gehäuseteils zum Herstellen einer lösbaren Verbindung mit einer abtriebsseitig angeordneten, vom Standard-Getriebe antreibbaren Vorrichtung verwendet werden und
an der zweiten Abtriebswelle Mittel zum Herstellen einer lösbaren Verbindung, insbesondere Passfeder, der zweiten Abtriebswelle mit einem drehbaren Teil der abtriebsseitig angeordneten, vom Standard-Getriebe antreibbaren Vorrichtung verwendet werden,
wobei der Radialabstand, also zumindest der kleinste Radialabstand, der
Verbindungsgewindebohrungen (7) zur Drehachse der zweiten Abtriebswelle größer ist als der Radius des Außenrings des zweiten abtriebsseitigen Lagers und des Außenradius des zweiten abtriebsseitigen Wellendichtrings.

21. Verfahren nach mindestens einem der vorangegangenen Ansprüche,
**dadurch gekennzeichnet, dass**
die Schnittstelle zumindest eine zentral angeordnetes Bohrung und zumindest zwei Gewindebohrungen umfasst.

22. Verfahren nach mindestens einem der vorangegangenen Ansprüche,
**dadurch gekennzeichnet, dass**
die erste Abtriebswelle die zweite Abtriebswelle umfasst.

23. Verfahren nach mindestens einem der vorangegangenen Ansprüche,
**dadurch gekennzeichnet, dass**
die erste Abtriebswelle aus der zweiten Abtriebswelle durch Verbinden der zweiten Abtriebswelle mit einem weiteren Abtriebswellenabschnitt, also Flanschteil, herstellbar ist.

24. Verfahren nach Anspruch 23,
**dadurch gekennzeichnet, dass**
das Verbinden ein Schweißen, Kleben und/oder ein Einpressen ist.

25. Verfahren nach mindestens einem der vorangegangenen Ansprüche,
**dadurch gekennzeichnet, dass**
der weitere Abtriebswellenabschnitt mit Innenverzahnung, insbesondere Rändelung oder Evolventenverzahnung, ausgeführt ist, wobei die Innenverzahnung beim Einpressen in die zweiten Abtriebswelle spanend und/oder verformend einpressbar ist.

26. Verfahren nach mindestens einem der vorangegangenen Ansprüche,
**dadurch gekennzeichnet, dass** die zweite Abtriebswelle als Hohlwelle ausgeführt ist.

27. Verfahren nach mindestens einem der vorangegangenen Ansprüche,
**dadurch gekennzeichnet, dass**
die erste Abtriebswelle als Hohlwelle vorsehbar ist.

28. Verfahren nach mindestens einem der vorangegangenen Ansprüche,
**dadurch gekennzeichnet, dass** die erste mit der zweiten Abtriebswelle stoff-, kraft- und/oder formschlüssig verbunden ist.

29. Verfahren nach mindestens einem der vorangegangenen Ansprüche,
**dadurch gekennzeichnet, dass**
der weitere Abtriebswellenabschnitt zur Verbindung mit der zweiten Abtriebswelle mindestens einen zylindrischen und einen verzahnten und/oder gerändelten Bereich aufweist.

30. Verfahren nach mindestens einem der vorangegangenen Ansprüche,
**dadurch gekennzeichnet, dass**
der Innendurchmesser des Lagers (4) größer als der Durchmesser der Bohrung im Gehäuseteil 6 ist, die die abtriebsseitige Öffnung im Gehäuseteil(6)für die Abtriebswelle 1 darstellt.

31. Verfahren nach mindestens einem der vorangegangenen Ansprüche,
**dadurch gekennzeichnet, dass**
Standard-Getriebe nur ein- oder mehrstufige Stirnradgetriebe, Winkelgetriebe, wie Schneckengetriebe, Spiroplangetriebe und/oder Kegelgetriebe umfassen.

## Claims

1. A drive,
comprising at least one housing part (6) and one output shaft (21) mounted in a bearing (24) at the output end, wherein a shaft-sealing ring (23) at the output end is provided for sealing purposes at the output end,
wherein the shaft-sealing ring (23) at the output end and the bearing (24) at the output end are provided between the output shaft (21) and an intermediate flange (25),
wherein the said intermediate flange (25) is provided in the housing part in such a way that it
- rests for positioning purposes against a bore designed in a suitable manner in the form of a bearing seat and a seat for the shaft-sealing ring,
- is fastened by means of a releasable connexion (72) to the housing part, in particular for the transmission of force and/or torque, and
- is machined in such a way for connexion to a non-rotating part of an apparatus to be driven that it has attachment facilities (38), such as bore holes, threaded bores and the like,
**characterized in that** the radial distance of the releasable connexion from the axis of rotation is smaller than the radius of the inner ring and/or the outer ring of the bearing (24) at the output end and/or of the internal radius of the shaft-sealing ring (23) at the output end.

2. A drive according to Claim 1, **characterized in that** the drive is a standard gear mechanism, i.e. a gear mechanism without a planetary gearing stage.

3. A drive according to at least one of the preceding Claims, **characterized in that** the bore designed in a suitable manner in the form of a bearing seat and a seat for the shaft-sealing ring is provided [with]¹ a recess (12), which is designed in a suitable manner for the reception of a securing ring for a bearing after the dismantling of the intermediate flange, wherein the said bore is machined and is capable of being provided in a suitable manner for reception as a bearing seat for the said bearing.
¹ *N.B.* The syntax of the clause in the original German clause is uncertain, as it contains two nouns in the nominative and a passive verb. The present reconstruction assumes that "... *ein Einstich (12) vorgesehen ist,* "should be *"... mit einem Einstich (12) versehen ist,* ".

4. A drive according to at least one of the preceding Claims, **characterized in that** the releasable connexion comprises at least fastening screws (72) and associated connecting threaded bores (7) which, after the dismantling of the intermediate flange, are capable of being used for connexion to the apparatus which is capable of being connected in a releasable manner at the output end and is capable of being driven by the output shaft.

5. A drive according to at least one of the preceding Claims, **characterized in that** the intermediate flange has means for producing a further releasable connexion, such as a bore or the like, with an apparatus which is capable of being connected in a releasable manner at the output end and is capable of being driven by the output shaft.

6. A drive according to at least one of the preceding Claims, **characterized in that** the connexion of the intermediate flange to the housing part comprises means for connecting purposes, such as fastening screws (72) and connecting threaded bores (7).

7. A drive according to at least one of the preceding Claims, **characterized in that** the output shaft is capable of being connected with positive locking to the apparatus capable of being attached at the output end to the standard gear mechanism and has a bore for centring purposes, the length of the receiving means formed in this way being smaller than the diameter of the receiving means.

8. A drive according to at least one of the preceding Claims, **characterized in that** at the output end the output shaft has a mechanical interface for industrial robots in accordance with EN ISO 9409-1.

9. A drive according to at least one of the preceding Claims, **characterized in that** the output shaft is driven by a toothed wheel connected in a releasable manner to the output shaft or by another toothed part connected in a suitable manner.

10. A drive according to at least one of the preceding Claims, **characterized in that** the standard gear mechanism is designed in such a way that the output shaft is capable of being assembled in the standard gear mechanism in an axial direction.

11. A drive according to at least one of the preceding Claims, **characterized in that** in the region of the bore designed in a suitable manner in the form of a bearing seat and a seat for [the] shaft-sealing ring the output shaft has an offset, i.e. a change in diameter.

12. A drive according to at least one of the preceding Claims, **characterized in that** a bearing is provided for the mounting for the output shaft on its end not on the output side, *i.e*. the end on the input side in the housing part, which is connected to the intermediate flange.

13. A drive according to at least one of the preceding Claims, **characterized in that** a friction-welded¹ and/or forged blank is capable of being used to produce the output shaft.
¹ *N.B.* The word which appears in the original German text is *rebgeschweißt* (literally "vine-welded"), obviously in error for *reibgeschweißt* (friction-welded).

14. A drive according to at least one of the preceding Claims, **characterized in that** the output shaft is constructed in at least two parts in order to reduce costs during the production.

15. A drive according to at least one of the preceding Claims, **characterized in that** for the two-part design a flange part is connected in a fixed manner to the end of the output shaft on the output side.

16. A drive according to at least one of the preceding Claims, **characterized in that** in the production the fixed connexion of the flange part to the output shaft is provided by means of a welded join, a press fitting and/or an adhesive join.

17. A drive according to at least one of the preceding Claims, **characterized in that** in the production after the fixed connexion at least the bearing points are finish-machined and/or ground.

18. A drive according to at least one of the preceding Claims, **characterized in that** the drive is or comprises an electric motor and the output shaft [is or comprises]² a rotor shaft.
² A verb is not specified in the second part of the clause. It is assumed in the translation that the two alternatives indicated in the first part are to apply in the second part as well.

19. A drive according to at least one of the preceding Claims, **characterized in that** the electric motor is constructed in the form of a polyphase motor for directly driving a load, in particular without a gear mechanism arranged between the electric motor and the load.

20. A production process for the selective production of a first or second gear-mechanism variant of a construction set for a series of standard gear mechanisms, *i.e.* gear mechanisms without a planetary-gearing stage, with at least one structural size defined by its axial height,
wherein the construction set for each structural size comprises at least
- the same housing part for the two variants,
- a first toothed part which is capable of being connected to an output shaft,
- at least one further toothed part which is capable of being brought into engagement with the first toothed part, and
- further parts which are capable of being connected and/or being brought into contact with the further toothed part, in particular in order to form a gear-mechanism stage and/or a plurality of gear-mechanism stages of the standard gear mechanism,
i)
wherein, in order to produce the first variant of standard gear mechanisms within the structural size, the construction set
- comprises a first bearing at the output end,
- comprises a first output shaft mounted in the bearing at the output end and in a further bearing, in particular in a bearing situated further towards the input end,
- comprises an intermediate flange, and
- comprises a first shaft-sealing ring at the output end for sealing purposes at the output end,
and in the first variant the first shaft-sealing ring at the output end and the first bearing at the output end are provided between the first output shaft and the intermediate flange in such a way that the output shaft is mounted and sealed off in the intermediate flange,
wherein the said intermediate flange is provided in the housing part in such a way and is connected to the latter in a releasable manner at an interface in such a way that it
- rests against a bore - designed in a suitable manner in the form of a bearing seat and a seat for the shaft-sealing ring - in the housing part for positioning purposes, and in particular therefore for centring purposes, and
- is fastened to the housing part by means of a releasable connexion embraced by the interface and comprising fastening screws and connecting threaded bores 7, for the transmission of force and/or torque,
wherein the radial distance of the releasable connexion from the axis of rotation is smaller than the radius of the inner ring and/or the outer ring of the bearing at the output end and/or of the internal radius of the shaft-sealing ring at the output end,
ii)
wherein, in order to produce the second variant of standard gear mechanisms within the structural size, the construction set
- does not comprise an intermediate flange,
- comprises the same housing as the first variant,
- comprises the same toothed parts as the first variant,
- comprises a second shaft-sealing ring at the output end for sealing purposes at the output end, and
- comprises a second bearing at the output end,
and in the second variant the second shaft-sealing ring at the output end and the second bearing at the output end are provided between a second output shaft and the housing part on the bore - designed in a suitable manner in the form of a bearing seat and a seat for the shaft-sealing ring - of the first variant,
wherein the connecting threaded bores (7) of the releasable connexion of the housing part are used in order to produce a releasable connexion with an apparatus arranged at the output end and capable of being driven by the standard gear mechanism, and means for producing a releasable connexion, in particular a feather key, of the second output shaft with a rotatable part of the apparatus arranged at the output end and capable of being driven by the standard gear mechanism are used on the second output shaft,
wherein the radial distance, i.e. at least the smallest radial distance, of the connecting threaded bores (7) from the axis of rotation of the second output shaft is larger than the radius of the outer ring of the second bearing at the output end and of the external radius of the second shaft-sealing ring at the output end.

21. A process according to at least one of the preceding Claims, **characterized in that** the interface comprises at least one centrally arranged bore and at least two threaded bores.

22. A process according to at least one of the preceding Claims, **characterized in that** the first output shaft embraces the second output shaft.

23. A process according to at least one of the preceding Claims, **characterized in that** the first output shaft is capable of being produced from the second output shaft by connecting the second output shaft to a further output-shaft portion, *i.e.* a flange part.

24. A process according to Claim 23, **characterized in that** the connexion is welding, adhesion and/or pressing in.

25. A process according to at least one of the preceding Claims, **characterized in that** the further output-shaft portion is constructed with an internal set of teeth, in particular a knurling or an involute set of teeth, wherein the internal set of teeth is capable of being pressed into the second output shaft in a cutting and/or deforming manner during the pressing in.

26. A process according to at least one of the preceding Claims, **characterized in that** the second output shaft is constructed in the form of a hollow shaft.

27. A process according to at least one of the preceding Claims, **characterized in that** the first output shaft is capable of being provided in the form of a hollow shaft.

28. A process according to at least one of the preceding Claims, **characterized in that** the first output shaft is connected to the second output shaft in an integral manner, in a non-positively locking manner and/or in a positively locking manner.

29. A process according to at least one of the preceding Claims, **characterized in that** the further output-shaft portion has at least one cylindrical and one toothed and/or knurled region for connexion to the second output shaft.

30. A process according to at least one of the preceding Claims, **characterized in that** the internal diameter of the bearing (4) is larger than the diameter of the bore in the housing part 6, which bore represents the opening at the output end in the housing part (6) for the output shaft 1.

31. A process according to at least one of the preceding Claims, **characterized in that** standard gear mechanisms comprise only single-stage or multiple-stage spur-wheel gear mechanisms, angular gear mechanisms, such as worm gear mechanisms, Spiroplan gear mechanisms and/or bevel gear mechanisms.

## Revendications

1. Entraînement,
comprenant au moins une partie boîtier (6) et un arbre de sortie (21) monté dans un palier (24) côté sortie, un joint d'arbre (23) côté sortie étant prévu pour l'étanchéité côté sortie,
le joint d'arbre (23) côté sortie et le palier (24) côté sortie étant prévus entre l'arbre de sortie (21) et un flasque intermédiaire (25),
ce flasque intermédiaire étant prévu dans la partie boîtier de façon que
- pour le positionnement, il soit en appui contre un trou réalisé de manière appropriée comme siège de palier et siège de joint d'arbre,
- il soit fixé à la partie boîtier au moyen d'un raccordement amovible (72), en particulier pour la transmission de force et/ou de couple, et
- pour le raccordement avec une partie non tournante d'un dispositif à entraîner, il soit usiné de façon qu'il présente des possibilités de connexion (38) comme des trous forés, des trous filetés et analogues,
**caractérisé en ce que**
la distance radiale du raccordement amovible à l'axe de rotation est plus petite que le rayon de la bague intérieure et/ou de la bague extérieure du palier (24) côté sortie et/ou du rayon intérieur du joint d'arbre (23) côté sortie.

2. Entraînement selon la revendication 1,
**caractérisé en ce que**
l'entraînement est un réducteur standard, donc un réducteur sans étage de réducteur planétaire.

3. Entraînement selon au moins l'une des revendications précédentes,
**caractérisé en ce que**
le trou réalisé de manière appropriée comme siège de palier et siège de joint d'arbre est prévu avec une rainure (12) qui est réalisée de manière appropriée pour recevoir un circlip pour un palier après démontage du flasque intermédiaire,
ce trou de réception étant usiné et prévu de manière appropriée comme siège de palier pour ce palier.

4. Entraînement selon au moins l'une des revendications précédentes,
**caractérisé en ce que**
le raccordement amovible comprend au moins des vis de fixation (72) et des trous filetés de raccordement (7) associés qui, après démontage du flasque intermédiaire, sont utilisables pour le raccordement avec le dispositif raccordable de manière amovible côté sortie, entraînable par l'arbre de sortie.

5. Entraînement selon au moins l'une des revendications précédentes,
**caractérisé en ce que**
le flasque intermédiaire présente des moyens pour établir un raccordement amovible, comme un trou ou analogue, avec un dispositif raccordable de manière amovible côté sortie, entraînable par l'arbre de sortie.

6. Entraînement selon au moins l'une des revendications précédentes,
**caractérisé en ce que**
le raccordement du flasque intermédiaire avec la partie boîtier comprend des moyens de raccordement tels que vis de fixation (72) et trous filetés de raccordement (7).

7. Entraînement selon au moins l'une des revendications précédentes,
**caractérisé en ce que**
l'arbre de sortie est raccordable par complémentarité de formes avec le dispositif raccordable côté sortie au réducteur standard et présente un trou pour le centrage, la longueur du logement ainsi créé étant plus petite que le diamètre du logement.

8. Entraînement selon au moins l'une des revendications précédentes,
**caractérisé en ce que**
l'arbre de sortie présente côté sortie une interface mécanique pour robots industriels selon EN ISO 9409-1.

9. Entraînement selon au moins l'une des revendications précédentes,
**caractérisé en ce que**
l'arbre de sortie est entraîné par une roue dentée raccordée de manière amovible ou une autre pièce dentée raccordée d'une manière correspondante.

10. Entraînement selon au moins l'une des revendications précédentes,
**caractérisé en ce que**
le réducteur standard est réalisé de façon que l'arbre de sortie puisse être monté dans une direction axiale dans le réducteur standard.

11. Entraînement selon au moins l'une des revendications précédentes,
**caractérisé en ce que**
l'arbre de sortie présente un gradin, donc un changement de diamètre, dans la région du trou réalisé de manière appropriée comme siège de palier et siège de joint d'arbre.

12. Entraînement selon au moins l'une des revendications précédentes,
**caractérisé en ce que**
il est prévu un palier pour le montage de l'arbre de sortie à son extrémité non côté sortie, donc son extrémité côté entrée dans la partie boîtier qui est raccordée au flasque intermédiaire.

13. Entraînement selon au moins l'une des revendications précédentes,
**caractérisé en ce que**
l'on peut utiliser une pièce brute soudée par friction ou forgée pour fabriquer l'arbre de sortie.

14. Entraînement selon au moins l'une des revendications précédentes,
**caractérisé en ce que**
l'arbre de sortie est réalisé au moins en deux pièces pour réduire le coût de fabrication.

15. Entraînement selon au moins l'une des revendications précédentes,
**caractérisé en ce que**
pour la réalisation en deux pièces, une partie flasque est raccordée rigidement à l'extrémité côté sortie de l'arbre de sortie.

16. Entraînement selon au moins l'une des revendications précédentes,
**caractérisé en ce que**
lors de la fabrication, le raccordement rigide de la partie flasque à l'arbre de sortie est prévu par soudage, ajustement serré et/ou collage.

17. Entraînement selon au moins l'une des revendications précédentes,
**caractérisé en ce que**
lors de la fabrication, après le raccordement rigide, au moins les paliers sont finis et/ou polis.

18. Entraînement selon au moins l'une des revendications précédentes,
**caractérisé en ce que**
l'entraînement est ou comprend un moteur électrique et l'arbre de sortie un arbre de rotor.

19. Entraînement selon au moins l'une des revendications précédentes,
**caractérisé en ce que**
le moteur électrique est réalisé sous forme de moteur polyphasé pour l'entraînement direct d'une charge, en particulier sans un réducteur disposé entre moteur électrique et charge.

20. Procédé de fabrication permettant de fabriquer au choix une première ou une deuxième variante de réducteur à partir d'un jeu de pièces détachées pour une gamme de réducteurs standard, donc des réducteurs sans étage de réducteur planétaire, avec au moins une taille de construction définie par sa hauteur d'axe,
le jeu de pièces détachées pour chaque taille de construction comprenant au moins
- la même partie boîtier pour les deux variantes,
- une première pièce dentée qui est raccordable à un arbre de sortie,
- au moins une autre pièce dentée qui peut être mise en prise avec la première pièce dentée, et
- d'autres pièces qui peuvent être mises en liaison et/ou contact avec l'autre pièce dentée, en particulier pour former un étage réducteur et/ou plusieurs étages réducteurs du réducteur standard,
i)
le jeu de pièces détachées pour fabriquer la première variante dé réducteurs standard à l'intérieur de la taille de construction comprenant
- un premier palier côté sortie,
- un premier arbre de sortie monté dans le palier côté sortie et dans un autre palier, en particulier dans autre palier situé côté entrée,
- un flasque intermédiaire et
- un premier joint d'arbre côté sortie pour l'étanchéité côté sortie,
et, dans la première variante, le premier joint d'arbre côté sortie et le premier palier côté sortie étant prévus entre le premier arbre de sortie et le flasque intermédiaire de façon que l'arbre de sortie soit monté et rendu étanche dans le flasque intermédiaire,
ce flasque intermédiaire étant prévu dans la partie boîtier et avec celle-ci raccordé de manière amovible à une interface de façon que
- pour le positionnement, en particulier pour le centrage, il soit en appui contre un trou réalisé de manière appropriée comme siège de palier et siège de joint d'arbre et
- pour la transmission de force et/ou de couple, il soit fixé à la partie boîtier au moyen d'un raccordement amovible compris par l'interface, comprenant vis de fixation et trous filetés de raccordement 7 sur la partie boîtier,
la distance radiale du raccordement amovible à l'axe de rotation étant plus petite que le rayon de la bague intérieure et/ou de la bague extérieure du palier côté sortie et/ou du rayon intérieur du premier joint d'arbre côté sortie,
ii)
le jeu de pièces détachées pour fabriquer la deuxième variante de réducteurs standard à l'intérieur de la taille de construction
- ne comprenant pas de flasque intermédiaire,
- comprenant le même boîtier que la première variante,
- comprenant les mêmes pièces dentées que la première variante,
- comprenant un deuxième joint d'arbre côté sortie pour l'étanchéité côté sortie et
- comprenant un deuxième palier côté sortie,
et, dans la deuxième variante, le deuxième joint d'arbre côté sortie et le deuxième palier côté sortie étant prévus entre un deuxième arbre de sortie et la partie boîtier sur le trou réalisé de manière appropriée comme siège de palier et siège de joint d'arbre de la première variante,
les trous filetés de raccordement (7) du raccordement amovible de la partie boîtier étant utilisés pour établir un raccordement amovible avec un dispositif disposé côté sortie, entraînable par le réducteur standard et
des moyens étant utilisés sur le deuxième arbre de sortie, en particulier une clavette, pour établir un raccordement amovible du deuxième arbre de sortie avec une partie tournante du dispositif disposé côté sortie, entraînable par le réducteur standard,
la distance radiale, donc au moins la plus petite distance radiale, des trous filetés de raccordement (7) à l'axe de rotation du deuxième arbre de sortie étant plus grande que le rayon de la bague extérieure du deuxième palier côté sortie et du rayon extérieur du deuxième joint d'arbre côté sortie.

21. Procédé selon au moins l'une des revendications précédentes,
**caractérisé en ce que**
l'interface comprend au moins un trou disposé en position centrale et au moins deux trous filetés.

22. Procédé selon au moins l'une des revendications précédentes,
**caractérisé en ce que**
le premier arbre de sortie comprend le deuxième arbre de sortie.

23. Procédé selon au moins l'une des revendications précédentes,
**caractérisé en ce que**
le premier arbre de sortie peut être fabriqué à partir du deuxième arbre de sortie par raccordement du deuxième arbre de sortie avec une autre section d'arbre de sortie, donc la partie flasque.

24. Procédé selon la revendication 23,
**caractérisé en ce que**
le raccordement est un collage, un soudage et/ou un ajustement à force.

25. Procédé selon au moins l'une des revendications précédentes,
**caractérisé en ce que**
l'autre section d'arbre de sortie est réalisée avec une denture intérieure, en particulier un moletage, la denture intérieure pouvant être ajustée par enlèvement de copeaux et/ou déformation lors de l'ajustement à force dans le deuxième arbre de sortie.

26. Procédé selon au moins l'une des revendications précédentes,
**caractérisé en ce que**
le deuxième arbre de sortie est réalisé sous forme d'arbre creux.

27. Procédé selon au moins l'une des revendications précédentes,
**caractérisé en ce que**
le premier arbre de sortie peut être prévu sous forme d'arbre creux.

28. Procédé selon au moins l'une des revendications précédentes,
**caractérisé en ce que**
le premier arbre de sortie est assemblé au deuxième arbre de sortie par liaison de matière, par force ou par complémentarité de formes.

29. Procédé selon au moins l'une des revendications précédentes,
**caractérisé en ce que**
l'autre section d'arbre de sortie présente pour le raccordement avec le deuxième arbre de sortie au moins une région cylindrique et une région dentée et/ou moletée.

30. Procédé selon au moins l'une des revendications précédentes,
**caractérisé en ce que**
le diamètre intérieur du palier (4) est plus grand que le diamètre du trou dans la partie boîtier 6 qui représente l'ouverture côté sortie dans la partie boîtier (6) pour l'arbre de sortie 1.

31. Procédé selon au moins l'une des revendications précédentes,
**caractérisé en ce que**
les réducteurs standard comprennent seulement des réducteurs droits, des réducteurs angulaires comme des réducteurs à vis sans fin, des réducteurs Spiroplan et/ou des réducteurs coniques à un ou plusieurs étages.
